# EUROPÄISCHE PATENTSCHRIFT

(11) **EP 2 179 193 B1**
(45) Veröffentlichungstag und Bekanntmachung des Hinweises auf die Patenterteilung: **02.07.2014**
(21) Anmeldenummer: 08786500.2
(22) Anmeldetag: 28.07.2008
(51) Int. Cl.: F16D 21/04

(54) **SCHALTELEMENT UMFASSEND ZUMINDEST DREI SCHALTSTELLUNGEN ZUM SCHALTEN VON ZWEI ÜBERSETZUNGSSTUFEN**
SHIFTING ELEMENT COMPRISING AT LEAST THREE SHIFT POSITIONS FOR SHIFTING TWO GEAR RATIOS
ÉLÉMENT DE CHANGEMENT DE VITESSES COMPRENANT AU MOINS TROIS POSITIONS DE CHANGEMENT DE VITESSES POUR ENGAGER DEUX RAPPORTS DE TRANSMISSION

(30) Priorität: 24.08.2007 DE 102007040040
(43) Veröffentlichungstag der Anmeldung: 28.04.2010
(73) Patentinhaber: ZF Friedrichshafen AG, 88038 Friedrichshafen (DE)
(72) Erfinder: GÖTZ, Manuel, 88212 Ravensburg (DE); REISCH, Matthias, 88214 Ravensburg (DE); GUMPOLTSBERGER, Gerhard, 88045 Friedrichshafen (DE)
(86) Internationale Anmeldenummer: PCT/EP2008/059859
(87) Internationale Veröffentlichungsnummer: WO 2009/027162

(56) Entgegenhaltungen:
- FR-A- 2 875 183
- FR-A- 2 875 280
- US-A- 3 333 661
- US-A- 4 111 288
- US-A- 4 303 151

## Beschreibung

Die vorliegende Erfindung bezieht sich auf ein Schaltelement umfassend zumindest drei Schaltstellungen zum Schalten von zwei Übersetzungsstufen gemäß dem Oberbegriff des Patentanspruchs 1.

Bei Handschaltgetrieben, automatisierten Handschaltgetrieben und Doppelkupplungsgetrieben erfolgt das Einlegen bzw. Vorwählen der Gänge nach dem Stand der Technik mit herkömmlichen Klauenelementen oder Synchronisierungen. Hierbei kann bei zwei benachbarten, auf einer Welle liegenden Übersetzungsstufen, je nach Stellung der Schaltbetätigung, wechselseitig eine von diesen zwei benachbarten Übersetzungsstufen eingelegt bzw. an die Welle gekoppelt werden, oder es können bei Neutralstellung der Schaltbetätigung, beide Übersetzungsstufen ausgelegt werden.

Bei einigen Getriebekonzepten, beispielsweise bei Doppelkupplungsgetrieben ist es aufgrund der Anordnung der Übersetzungsstufen notwendig, dass bei einer Neutralstellung der Schaltbetätigung beide benachbarte, auf einer Welle liegende Übersetzungsstufen konzeptbedingt geschaltet sein müssen, um einen Gang vorwählen zu können. Für diese Getriebekonzepte können herkömmliche Synchronisierungen und Klauenschaltelemente nicht eingesetzt werden, da bei diesen Elementen die Schaltmuffe immer nur einen Gang schalten kann und in Neutralstellung beide Gänge ausgelegt sind. Im folgenden werden Beispiele für derartige Getriebekonzepte kurz vorgestellt.

Ein derartiges Getriebe ist beispielsweise aus der DE 10232831 A1 der Anmelderin bekannt. Das bekannte Doppelkupplungsgetriebe in Vorgelegebauweise umfasst eine Antriebswelle, die über eine erste Kupplung mit einer Welle eines ersten Teilgetriebes und über eine zweite Kupplung mit einer Welle eines zweiten Teilgetriebes koppelbar ist, wobei die Teilgetriebe jeweils unterschiedliche Übersetzungen durch Gruppengetriebe ermöglichen, welche durch eine Synchronisierung aktivierbar sind. Hierbei ist zur Synchronisierung eines Schaltelementes des jeweiligen ersten Gruppengetriebes die jeweilige Kupplung jedes Teilgetriebes geeignet betätigbar; ferner ist bei jedem Teilgetriebe zumindest eine Synchronisierkupplung vorgesehen.

Aus der DE 10232835 A1 der Anmelderin ist ein Doppelkupplungsgetriebe für ein Kraftfahrzeug bekannt, umfassend mindestens zwei Getriebegruppen mit Wellen, Schaltelementen und Rädern, wobei die Getriebegruppen mit einer gemeinsamen Antriebswelle über den Getriebegruppen zugeordnete Lastschaltkupplungen in Kraftfluss bringbar sind. Bei dem bekannten Getriebe ist jede Getriebegruppe derart aufgebaut, dass sie mindestens zwei Hauptzweige aufweist, wobei den Hauptzweigen jeder Getriebegruppe Radsätze nachgeschaltet sind, über die mittels Schaltelementen eine Verbindung zu einem gemeinsamen Abtriebsrad einer Abtriebswelle herstellbar ist.

Des weiteren ist aus der DE 3233931 C2 ein Zapfwellen-Antrieb für ein Getriebe mit inkorporierter Doppelkupplung bekannt, wobei der Zapfwellen-Antrieb einen ersten, mit der Zapf-Hauptwelle verbundenen bzw. verriegelten Getriebemechanismus und einen mit der Bewegungs-Lauf-Hauptwelle verriegelten bzw. verbundenen zweiten Getriebemechanismus und eine Kupplungseinrichtung aufweist, die so arbeitet, dass wahlweise die Getriebemechanismen mit der Zapf-Übertragungswelle trieblich gekuppelt werden können.

Aus der Druckschrift FR 2 875 183A sowie aus der FR 2 875 280 A ist jeweils ein Schaltelement umfassend zumindest drei Schaltstellungen zum Schalten von Übersetzungsstufen bekannt, bei dem in einer ersten Endlage, die einer ersten Schaltstellung entspricht, die erste Übersetzungsstufe geschaltet ist und in einer zweiten Endlage, die einer zweiten Schaltstellung entspricht, die zweite Übersetzungsstufe geschaltet ist, wobei in der Mittelstellung, die einer dritten Schaltstellung entspricht, beide Übersetzungsstufen geschaltet sind. Das bekannte Schaltelement ist als Klauenschaltelement ausgebildet **und weist zwei Schaltmuffen auf, die über zwei Schaltgabeln betätigt werden. Somit sind zwei separate Schaltbetätigungen erforderlich.**

Der vorliegenden Erfindung liegt die Aufgabe zu Grunde, ein Schaltelement der eingangs beschriebenen Gattung vorzuschlagen, bei dem beim Auslegen eines Ganges und gleichzeitig geschaltetem anderen Gang, ein Verschieben der Schaltmuffe in der momentbelasteten Übersetzungsstufe nicht notwendig ist und **zudem** eine kompakte Bauweise realisiert wird.

Diese Aufgabe wird durch die Merkmale des Anspruchs 1 gelöst. Weitere erfindungsgemäße Ausgestaltungen gehen aus den Unteransprüchen hervor.

Erfindungsgemäß wird ein von einer herkömmlichen Synchronisiervorrichtung bzw. von einem herkömmlichen Klauenschaltelement ohne eine Synchronisiervorrichtung abgeleitetes Schaltelement vorgeschlagen, umfassend eine Schaltmuffe, welche in zwei Hälften bzw. Teile geteilt ist, so dass nur die jenige Schaltmuffenhälfte bzw. der jenige Schaltmuffenteil bewegt werden muss, mit der der zugehörige Gang aus- oder eingelegt werden soll. Die andere Schaltmuffenhälfte des eingelegten und dabei momentführenden Ganges bleibt unberührt. **Zur Schaltbetätigung ist nur eine Schaltbetätigungsaufnahme für beide Schaltmuffenhälften vorgesehen.**

Gemäß der Erfindung weist die Schaltbetätigung in herkömmlicher Art und Weise drei Stellungen auf, wobei die Mitnahme der beiden Schaltmuffenhälften entkoppelt ist, so dass je nach Position und Richtung der Bewegung der Schaltbetätigung entweder die eine oder die andere Schaltmuffenhälfte mitgenommen wird. Das Ausrücken des der jeweiligen Schaltmuffenhälfte zugeordneten Ganges erfolgt durch ein formschlüssiges Mitnahmeelement an der Schaltbetätigungsaufnahme, wobei die Ab- und Ankopplung der Schaltmuffenhälften beim Schalten bzw. beim Einlegen und Synchronisieren eines Ganges in der Schaltbetätigungsaufnahme stattfindet.

In vorteilhafter Weise kann an Synchronkörper (falls vorgesehen), Kupplungskörper, Synchronringen (falls vorgesehen) und Schiebemuffenhälften eine herkömmliche Klauenverzahnung verwendet werden.

Durch die erfindungsgemäße Konzeption wird ein kompaktes Schaltelement zur Verfügung gestellt, welches die oben genannten Anforderungen bezüglich des gleichzeitigen Schaltens zweier Gänge und des wechselseitigen Aus- und Wiedereinlegens jeweils eines Ganges erfüllt. Dadurch, dass die Klauenverzahnung der Bauteile übernommen werden kann, wird lediglich die Gestaltung der Schiebemuffe und die Anbindung dieser zur Schaltbetätigungsaufnahme modifiziert.

Die Erfindung wird im folgenden anhand der beigefügten Figuren beispielhaft näher erläutert: Es zeigen:
- Figur 1:: Eine schematische Schnittansicht einer Ausführungsform **eines bekannten** Schaltelementes;
- Figur 2:: Eine schematische Schnittansicht eines gemäß einer Ausführungsform der Erfindung ausgebildeten Schaltelementes in Mittelstellung und bei einem ausgelegtem Gang;
- Figur 3:: Vier schematische Schnittansichten eines gemäß einer **weiteren** Ausführungsform der Erfindung ausgebildeten Schaltelementes zur Veranschaulichung der einzelnen Schaltungen;
- Figur 4:: Eine schematische Ansicht einer weiteren Ausführungsform der Erfindung;
- Figur 5:: Eine schematische Ansicht einer weiteren Ausführungsform der Erfindung;
- Figur 6:: Eine schematische Ansicht einer weiteren Ausgestaltung eines erfindungsgemäßen Schaltelementes;
- Figur 7:: Eine schematische Ansicht einer weiteren Ausgestaltung eines erfindungsgemäßen Schaltelementes;
- Figur 8:: Schematische Ansichten des erfindungsgemäßen Schaltelementes gemäß Figur 7 zur Veranschaulichung des Wiedereinlegens und Synchronisierens des ausgelegten Ganges durch überlagerte Drehbewegung;
- Figur 9:: Schematische Ansichten einer weiteren Ausgestaltung eines erfindungsgemäßen Schaltelementes;
- Figur 10:: Schematische Ansichten einer weiteren vorteilhaften Ausgestaltung eines erfindungsgemäßen Schaltelementes;
- Figur 11:: Schematische Ansichten einer weiteren vorteilhaften Ausgestaltung eines erfindungsgemäßen Schaltelementes zur Veranschaulichung des Wiedereinlegens und Synchronisierens des ausgelegten Ganges durch Mitnahme von Kippsteinen;
- Figur 12:: Schematische Ansichten einer alternativen Ausführungsform des in Figur 11 gezeigten Schaltelementes zur Veranschaulichung des Wiedereinlegens und Synchronisierens des ausgelegten Ganges; und
- Figur 13:: Eine Übersicht der Funktionalität einer herkömmlichen Synchronisierung und der gemäß der Erfindung vorgeschlagenen Synchronisierungskonzepte.

Die nachfolgende Beschreibung erfolgt anhand erfindungsgemäßer Schaltelemente, die von einer herkömmlichen Synchronisiervorrichtung abgeleitet worden sind; es ist jedoch möglich, die erfindungsgemäßen Schaltelemente, wie bereits erläutert, von einem herkömmlichen Klauenschaltelement ohne eine Synchronisiervorrichtung abzuleiten, wobei in diesem Fall, die für die Erfindung relevanten Funktionen des Synchronkörpers von einem wellenfest angeordneten Teil des Klauenschaltelementes übernommen werden.

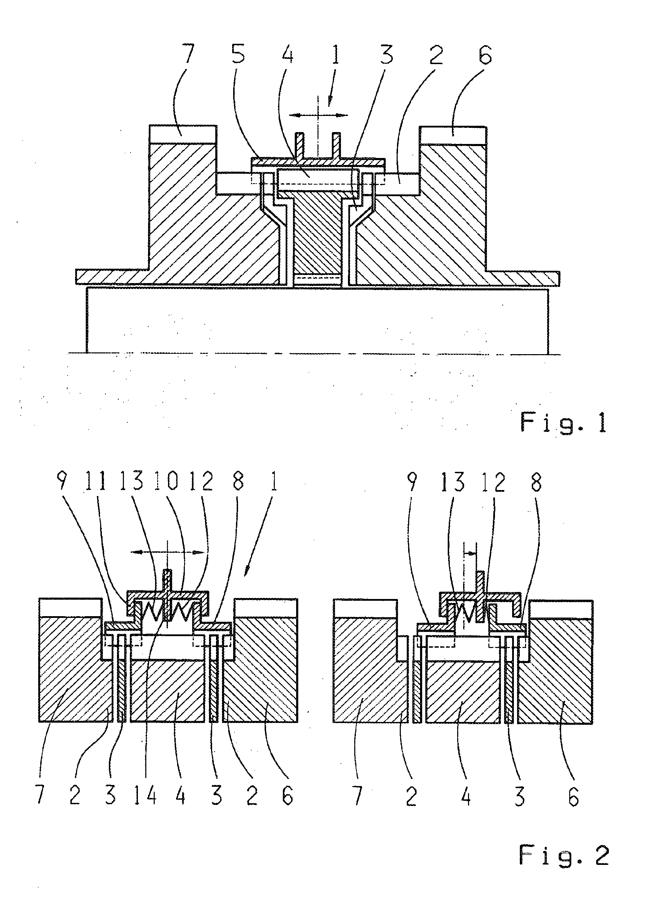

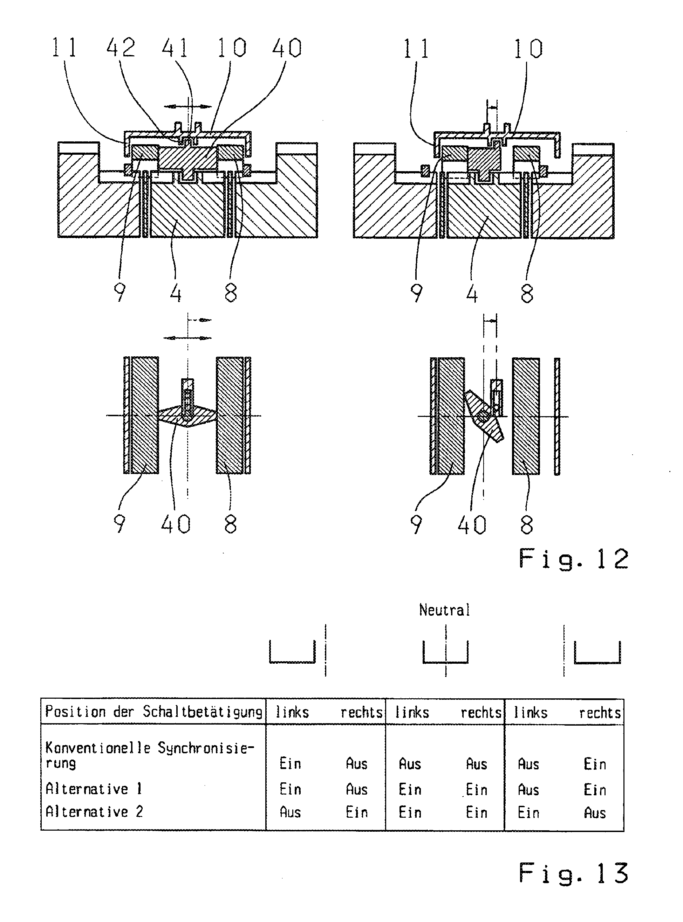

Gemäß einer **bekannten** Ausführungsform, die Gegenstand der Figur 1 ist, ist das Schaltelement 1 als herkömmliche Synchronisiervorrichtung umfassend Kupplungskörper 2, Synchronringe 3 und einen Synchronkörper 4 aufgebaut, bei der die axiale Länge der Schaltmuffe 5 derart verändert ist, dass in der Mittelstellung der Schaltmuffe 5 deren Klaueninnenverzahnung gleichzeitig in die Klauenaußenverzahnung der Kupplungskörper 2 beider benachbarter, auf einer Welle angeordneter Übersetzungsstufen bzw. Zahnräder 6, 7 eingreift. Im Gegensatz zu einer konventionellen Synchronisierung sind in der Mittelstellung des erfindungsgemäßen Schaltelementes beide Gänge eingelegt, wie auch anhand Figur 13 veranschaulicht, bei der das in Figur 1 gezeigte Schaltelement als Alternative 1 bezeichnet ist.

Bei der in Figur 2 gezeigten Ausführungsform ist die Schaltmuffe des Schaltelementes 1 geteilt ausgeführt und weist demnach zwei Schaltmuffenhälften 8, 9 auf. In der Figur ist die Schaltbetätigungsaufnahme 10, welche das Bindungsglied des Schaltelementes 1 zur Schaltbetätigung darstellt und ein formschlüssiges Mitnahmeelement 11 für die Schaltmuffenhälften 8, 9 aufweist, schematisch dargestellt. Die Schaltbetätigungsaufnahme 10 ist Π-förmig ausgeführt und weist einen mittig angeordneten Steg 14 auf, wobei die Schenkel die Mitnahmeelemente 11 bilden.

Gemäß der Erfindung sind an der Innenseite der Schaltbetätigungsaufnahme 10 zwischen dem mittleren Steg 14 der Schaltbetätigungsaufnahme 10 und den inneren Stirnseiten beider Schaltmuffenhälften 8, 9 axial wirkende Federelemente 12, 13 angebracht. Wenn nun beim Ausrücken des linken Ganges die Schaltbetätigungsaufnahme 10 nach rechts bewegt wird, nimmt diese zwar die linke Schaltmuffenhälfte 9 über das Mitnahmeelement 11 mit, lässt aber, da die auf der rechten Seite angeordnete Feder 12 zur Aufnahme der Bewegung der Schaltbetätigungsaufnahme 10 komprimiert wird, die rechte Schaltmuffenhälfte 8 unbewegt. Hierbei kann die Federkraft auf die Schaltmuffenhälfte 8 an einem Sicherungsring oder am Zahnrad abgestützt werden. Gemäß der Erfindung sind die Federelemente 12, 13 derart ausgelegt, dass die Federkraft mindestens so groß ist, wie die zur Synchronisierung und Einrückung der Klauenverzahnung erforderliche Kraft.

Im linken Teil der Figur befindet sich die Schaltbetätigung in Mittelstellung, wodurch beide Gänge eingelegt sind. Hierbei greifen die Innenklauenverzahnungen beider Schaltmuffenhälften 8, 9 sowohl in der Klauenverzahnung am Synchronkörper 4 als auch in der Klauenverzahnung am jeweiligen Kupplungskörper ein.

Die Funktionsweise des gezeigten Schaltelementes wird im folgenden anhand des Beispiels "linker Gang Ausrücken und wieder Einrücken" erläutert. Beim Ausrücken des linken Ganges ausgehend von der Neutralposition wird die Schaltbetätigung nach rechts bewegt, wobei das Mitnahmeelement 11 der Schaltbetätigungsaufnahme 10 die linke zu schaltende Schaltmuffenhälfte 9 mitnimmt und diese nach rechts schiebt, so dass die Klauenverzahnung des linken Kupplungskörpers nun nicht mehr im Eingriff mit der Innenklauenverzahnung der linken Schaltmuffenhälfte 9 ist; dies wird im rechten Teil der Figur veranschaulicht. Wie aus der Figur ersichtlich, bleibt dabei die Position der rechten Schaltmuffenhälfte 8 aufgrund der Komprimierung der Feder 12 unverändert (der rechte Gang bleibt eingelegt).

Beim Wiedereinlegen des linken Ganges wird nun die Schaltbetätigungsaufnahme 10 wieder nach links, d.h. zurück in die Mittelstellung bewegt. Dabei wird die linke Schaltmuffenhälfte 9 über die Federkraft der linken Feder 13 nach links geschoben.

Im Gegensatz zu einer konventionellen Synchronisierung sind in der Mittelstellung des erfindungsgemäßen Schaltelementes beide Gänge eingelegt, wie auch anhand Figur 13 veranschaulicht, bei der das in Figur 2 gezeigte Schaltelement als Alternative 1 bezeichnet ist.

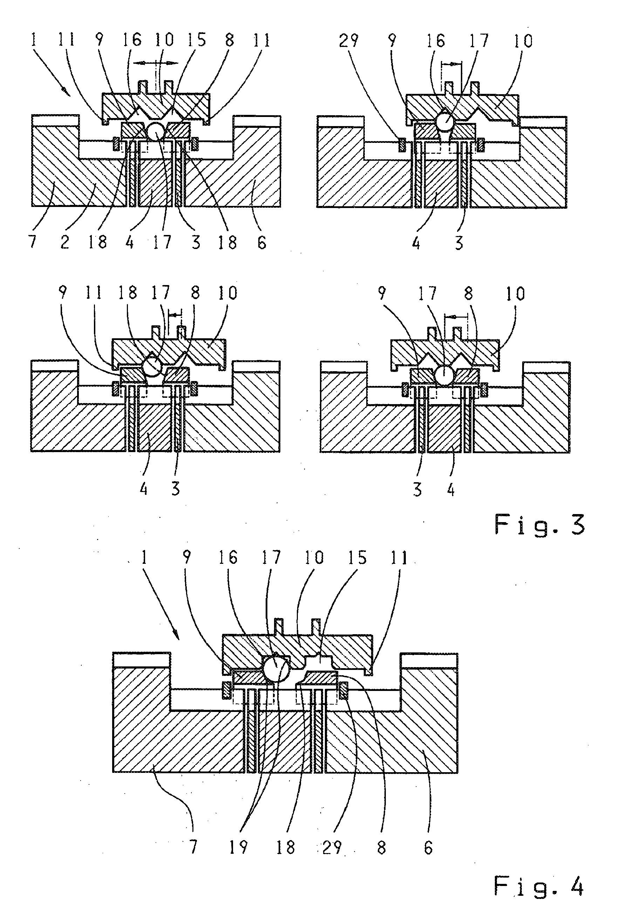

In Figur 3 ist eine weitere erfindungsgemäße Ausführungsform eines Schaltelementes dargestellt, bei der die Schaltmuffe ebenfalls in zwei Schaltmuffenhälften 8, 9 geteilt ausgeführt ist. Auch bei dieser Ausgestaltung erfolgt die Bewegung der Schaltmuffenhälften 8, 9 über ein Mitnahmeelement 11 der Schaltbetätigungsaufnahme 10, wobei zur Vermeidung der Mitbewegung der anderen Schaltmuffenhätfte die Schaltbetätigungsaufnahme 10 an der den Schaltmuffenhälften 8, 9 zugewandten Seite zwei Nuten 15, 16 aufweist, in die ein Verdrängkörper 17 drückbar ist.

Des weiteren weisen die inneren Stirnseiten der Schaltmuffenhälften 8, 9 Fasen 18 auf, über die der Verdrängkörper 17 bei Betätigung der Schaltbetätigungsaufnahme in eine der beiden Nuten 15, 16 führbar ist; in der Neutralposition (linke obere Figur) ist der Verdrängkörper 17 zwischen den beiden inneren Stirnseiten der Schaltmuffenhälften 8, 9 angeordnet.

Wenn der linke Gang ausgelegt wird, wird durch die Bewegung der linken Schaltmuffenhälfte 9 nach rechts über die Fasen 18 an der inneren Stirnseite der Schaltmuffenhälften 8, 9, der vorzugsweise als Kugel ausgebildete Verdrängkörper 17 nach oben in eine entsprechend geformte Nut 16 in der Schaltbetätigungsaufnahme 10 gedrückt, wie anhand der rechten oberen Figur verdeutlicht. Hierbei nimmt die rechte Schaltmuffenhälfte 8 die Abstützkraft der Kugel 17 auf und kann sich an einem Sicherungsring 29 oder alternativ direkt am Zahnrad 6 abstützen.

Wenn nun der linke Gang wiedereingelegt werden soll, wird, wie in der linken unteren Figur gezeigt, die Schaltbetätigungsaufnahme 10 wieder in die Mittelstellung bewegt und dabei die linke Schaltmuffenhälfte 9 über die Kugel 17 nach links bewegt, wobei die für die Synchronisierung und das Einrücken notwendige Kraft erfindungsgemäß über die Kugel 17 übertragen wird. Nach Beendigung des Synchronvorganges, wird die Kugel 17 wieder in die Ursprungsstellung zwischen den Schaltmuffenhälften 8, 9 gedrückt (rechte untere Figur), was über eine radial nach innen wirkende Federkraft erfolgen kann, wobei das gleichzeitige Überfahren der Kugel 17 durch die Schräge in der Nut 16 der Schaltbetätigungsaufnahme 10 diesen Rückholvorgang der Kugel 17 unterstützt. Vorzugsweise ist die Kugel 17 in einem Federring angeordnet.

Alternativ zu der Ausgestaltung als Kugel kann der Verdrängkörper weitere Formen aufweisen. Beispielsweise kann der Verdrängkörper nach unten (d.h. an der der Schaltbetätigungsaufnahme abgewandten Seite) konisch und nach oben (d.h. an der der Schaltbetätigungsaufnahme zugewandten Seite) zylindrisch oder quaderförmig ausgeführt sein, wobei die Nuten 15, 16 in der Schaltbetätigungsaufnahme 10 der Form des Verdrängkörpers angepasst ausgebildet sind.

Die in Figur 3 gezeigte Ausführungsform weist den Vorteil auf, dass ein weitestgehend formschlüssiger und zwangsgeführter Aus- und Einrückvorgang gewährleistet wird.

In Figuren 4, 5 und 6 sind erfindungsgemäße Ausgestaltungen des Schaltelementes zur sicheren Rückholung des als Kugel ausgeführten Verdrängelementes 17, auch unter Einfluss der Fliegkraft, dargestellt.

In Figur 4 wird eine Möglichkeit aufgezeigt, um ein Gleiten der Kugel 17 entlang der Fasen der Schaltmuffenhälften 8, 9 und der jeweiligen Nut 15, 16 in der Schaltbetätigungsaufnahme 10, zu vermeiden. Die Kugel 17 wird demnach während des Wiedereinrückens bzw. des Synchronisierens in Rillen 19 in den Fasen 18 der Schaltmuffenhälften 8, 9 und den Nuten 15, 16 in der Schaltbetätigungsaufnahme 10 gehalten. Dies resultiert in dem Vorteil, dass ein starres Verfahren der Einheit Schaltbetätigungsaufnahme/ Kugel/ Schaltmuffenhälfte beim Synchronisieren auftritt, was ein Gleiten der Kugel 17 entlang der Schrägflächen bzw. Fasen 18 verhindert.

Die Kugel 17 muss anschließend wieder in den Raum zwischen den Schaltmuffenhälften 8, 9 zurückgebracht werden, was beispielsweise durch einen Kugel/Federverbandsring erfolgen kann, bei dem die Federwirkung die Kugel 17 radial nach innen zieht.

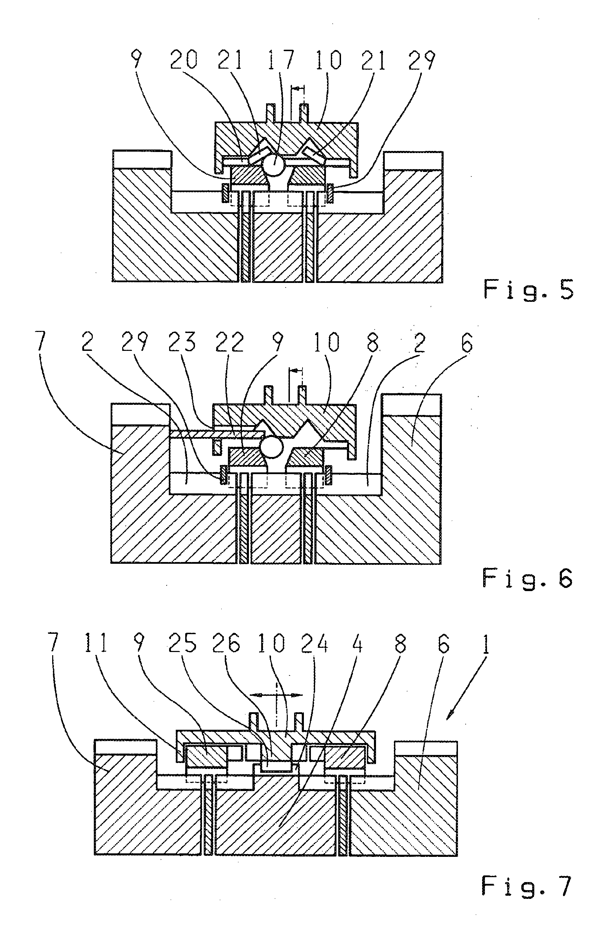

Alternativ dazu kann, wie in Figur 5 gezeigt, in der Innenseite der Schaltbetätigungsaufnahme 10 ein Federblech 20 umfassend Federlaschen 21 eingelegt bzw. angeordnet sein. Das Blech 20 wird gemäß der Erfindung gegen eine axiale Bewegung relativ zu Schaltbetätigungsaufnahme 10, durch das beidseitige Anliegen an den Innenseiten der Mitnahmeelemente 11 der Schaltbetätigungsaufnahme 10 gesichert.

Beim radialen Ausweichen einer Kugel oder eines anderen Verdrängkörpers 17 in eine der Nuten 15, 16 in der Schaltbetätigungsaufnahme 10 (d.h. beim Ausrücken eines Ganges), werden Federlaschen 21 am Federblech 20 vorgespannt, welche beim anschließenden Zurückfahren und Einrücken des Ganges die Kugeln bzw. die Verdrängkörper wieder in den Raum zwischen den Schaltmuffen 8, 9 zurückdrängen, wobei die Schräge an der jeweiligen Nut 15, 16 in der Schaltbetätigungsaufnahme 10, beim Überfahren der Kugeln oder anderer Verdrängkörper zusätzlich diese radial nach innen drückt.

In Figur 6 ist ein weiteres erfindungsgemäßes Prinzip der Kugel- bzw. Verdrängkörperrückholung dargestellt. Hierbei sind stirnseitig an den Zahnrädern 6, 7 oder an den Kupplungskörpern 2 Auswerferzähne einer Auswerfverzahnung 22 angeordnet, so dass, z.B. beim Verschieben der Schaltbetätigungsaufnahme 10 nach links in die Mittelstellung ab einer gewissen axialen Stellung der Schaltbetätigungsaufnahme 10 die Zähne der Auswerfverzahnung 22 in die Schaltbetätigungsaufnahme 10 über vorgesehene Öffnungen 23 eindringen und dadurch die Verdrängkörper 17 zum radialen Ausweichen nach innen und damit in den Raum zwischen den Schaltmuffenhälften 8, 9 zwingen.

In Figur 7 ist ein erfindungsgemäß ausgeführtes Schaltelement 1 dargestellt, bei dem, um bei einer Schaltung eine Mitbewegung der anderen Schaltmuffenhälfte 8 bzw. 9 zu vermeiden, der axialen Bewegung der Schaltbetätigungsaufnahme 10 eine Drehbewegung überlagert wird. Die Drehbewegung der Schaltbetätigungsaufnahme wird durch eine Schrägverzahnung 24 am Synchronkörper 4 erreicht, in der eine Innenschrägverzahnung 25 der Schaltbetätigungsaufnahme 10 eingreift. Die Schaltbetätigungsaufnahme ist Π-förmig ausgeführt und weist einen mittig angeordneten und die Innenschrägverzahnung 25 aufweisenden Steg 26 auf, wobei die Schenkel die Mitnahmeelemente 11 bilden. Für den Fall, dass das Schaltelement als Klauenschaltelement ohne Synchronringe aufgebaut ist, ist die Schrägverzahnung 24 an einem wellenfest angeordneten Teil des Klauenschaltelement angebracht.

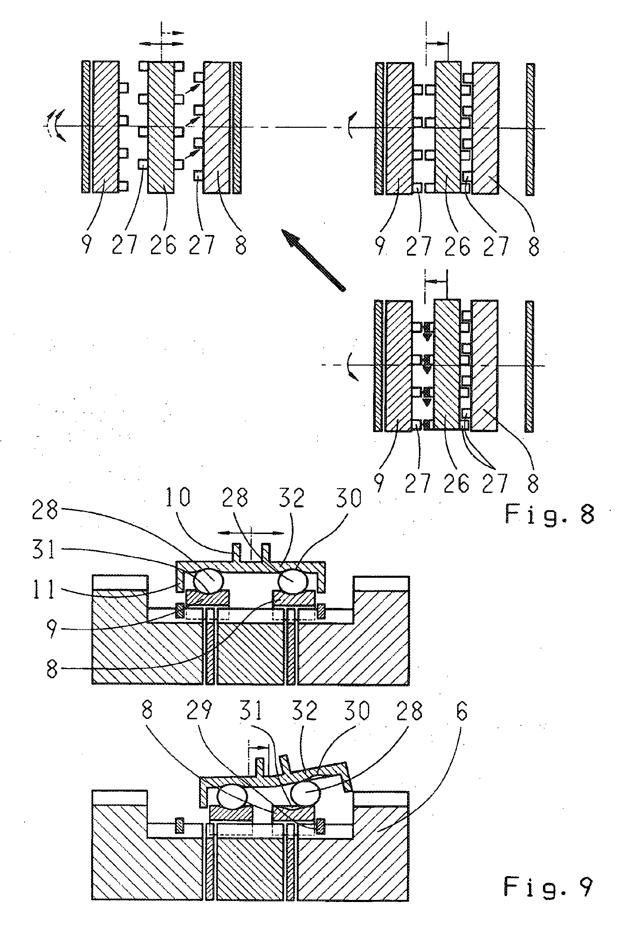

Die Funktionsweise des in Figur 7 gezeigten Schaltelementes wird anhand Figur 8 am Beispiel "linker Gang aus- und wieder einrücken" erläutert.

Das Ausrücken eines Ganges erfolgt durch die Mitnahmeelemente 11 an der Schaltbetätigungsaufnahme 10. An den Stirnseiten der Schaltmuffenhälften 8, 9 und an dem mittleren Steg 26 der Schaltbetätigungsaufnahme 10 sind stirnseitig Klauen 27 angebracht, die in der in der linken oberen Figur gezeigten Mittelstellung eine definierte Drehlage zueinander haben müssen. Die Darstellungen in Figur 8 sind Draufsichten auf das Schaltelement 1, bei Schnitt durch die Schaltbetätigungsaufnahme 10.

Wenn beispielsweise der linke Gang ausgerückt wird, nimmt das Mitnahmeelement 11 an der Schaltbetätigungsaufnahme 10 die linke Schaltmuffenhälfte 9 bei der Bewegung nach rechts mit. Hierbei wird gleichzeitig durch die Schrägverzahnung die Schaltbetätigungsaufnahme 10 relativ zu dem Synchronkörper 4 und den Schaltmuffenhälften 8, 9 , verdreht, wodurch sich die Winkelstellung der Klauen 27 zueinander ändert.

Bei dem gezeigten Beispiel kommen die Klauen 27 an der rechten Seite des Steges 26 der Schaltbetätigungsaufnahme 10 zur Freigabe von axialem Weg direkt neben den Klauen der rechten Schaltmuffenhälfte 8 zu liegen (obere rechte Figur), d. h. der axiale Abstand zwischen Schaltbetätigungsaufnahme 10 und rechter (d.h. der nicht zu schaltenden) Schaltmuffenhälfte 8 hat sich verkleinert (die rechte Schaltmuffenhälfte wurde nicht mitbewegt).

Der axiale Abstand zwischen dem Steg 26 der Schaltbetätigungsaufnahme 10 und der linker Schaltmuffenhälfte 9, hat sich aber nicht verändert, wohl aber die Winkellage der Klauen 27 der beiden Bauteile 9, 26. Insbesondere liegen (obere rechte Figur) die Stirnseiten der Klauen 27 auf der linken Seite des Steges 26 der Schaltbetätigungsaufnahme 10 direkt gegenüber den Stirnseiten der Klauen 27 auf der linken Schaltmuffenhälfte 9.

Wenn der linke Gang wieder eingelegt werden soll, drücken die Klauen 27 auf der linken Seite des Steges 26 der Schaltbetätigungsaufnahme 10, bei Bewegung dieser nach links (d.h. zurück in die Mittelstellung) auf die Stirnseite der linken Schaltmuffenhälfte 9, um diese zurück nach links in die Ausgangstellung zu schieben und dabei den Gang zu synchronisieren und einzurücken (rechte untere Figur). Bei dieser Schiebebewegung findet eine relative Gleitbewegung an den Stirnseiten der Klauen 27 durch die Verdrehung statt, so dass sich am Ende der Schiebebewegung die Klauen 27 wieder in der in der linken oberen Figur gezeigten Ausgangsstellung befinden.

Auch bei dem in Figur 9 gezeigten Beispiel erfolgt das Ausrücken eines Ganges durch die axiale Bewegung der Mitnahmeelemente 11 an der Schaltbetätigungsaufnahme 10. Hierbei ist vorgesehen, dass die Schaltbetätigungsaufnahme 10 radial federnd ausgeführt ist und am Umfang angeordnete, radial ausfedernde Laschen 32 aufweist, die bei einer Bewegung der Schaltbetätigungsaufnahme 10 über die jeweils stillstehende Schaltmuffenhälfte radial nach außen ausweichen können.

Diese Ausweichbewegung wird durch das Abrollen von Kugeln 28 begleitet, die in korrespondierenden Nuten 30, 31 in den ausfedernden Laschen in der Schaltbetätigungsaufnahme und den Schaltmuffenhälften 8, 9 geführt werden. Im linken Bild ist das erfindungsgemäße Schaltelement in der Mittelstellung dargestellt.

Wird der linke Gang ausgelegt (rechtes Bild), wird die Schaltbetätigungsaufnahme 10 nach rechts bewegt, und die Kugeln 28 auf der rechten Seite (d.h. die der nicht zu schaltenden Schaltmuffenhälfte zugeordneten Kugeln) rollen zum einen in den Nuten 30 in der Schaltbetätigungsaufnahme 10 und zum anderen in den Nuten 31 der rechten Schaltmuffenhälfte 8 nach rechts, wobei sie sich gleichzeitig durch die spezielle Kontur der Nuten 30, 31 radial nach außen bewegen.

Aufgrund dieser radialen Bewegung gibt die Schaltbetätigungsaufnahme 10 durch die am Umfang angebrachten federnden Laschen 32 radial nach außen nach, was bedeutet, dass die rechte Schaltmuffenhälfte 8 nicht mitbewegt wird. Die Federkraft, die dabei über die Kugeln 28 auf die rechte (d.h. die nicht zu schaltende) Schaltmuffenhälfte 8 wirkt, wird erfindungsgemäß an einem Sicherungsring 29 oder alternativ am Zahnrad 6 abgestützt.

Wird nun der linke Gang wieder eingelegt, nimmt die Schaltbetätigungsaufnahme 10 bei Bewegung zurück in die Mittelstellung die linken Kugeln 28 und damit die linke Schaltmuffenhälfte 8 nach links mit, wodurch der linke Gang wieder synchronisiert und eingelegt werden kann. Durch die Kontur der Nuten wird die rechte Schaltmuffenhälfte 8 auch bei einer Bewegung der rechten Kugeln zurück in die Ausgangslage nicht mitbewegt. Dabei ist vorgesehen, dass die Federkraft in den federnden Laschen 32 der Schaltbetätigungsaufnahme 10 so groß gewählt ist, dass sie bei der Synchronisation und dem Einlegen des Ganges die Kugeln 28 sicher in den Nuten 30, 31 hält.

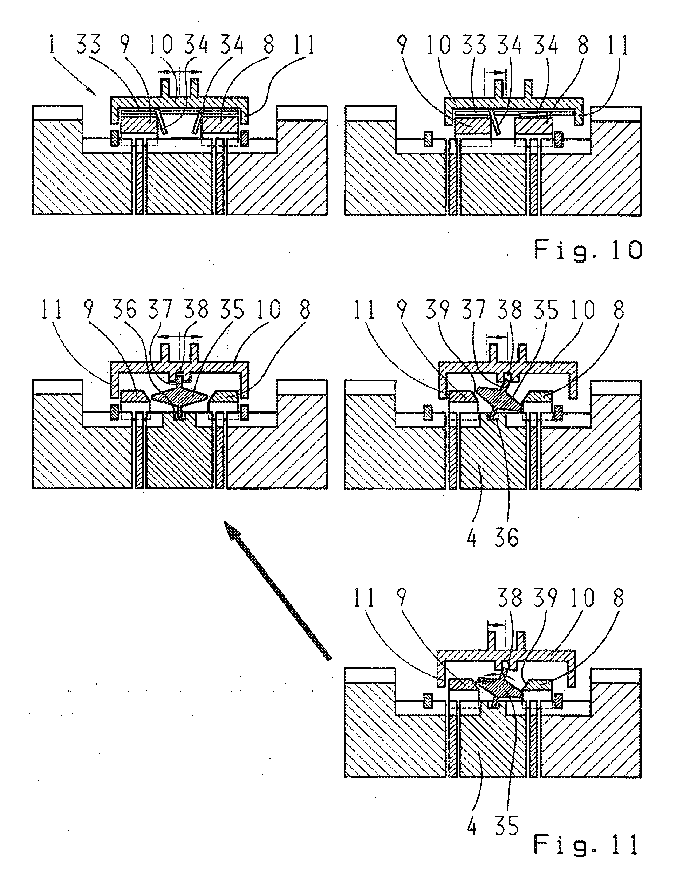

Eine weitere vorteilhafte Ausführungsform der Erfindung ist Gegenstand der Figur 10. Die Schaltbetätigungsaufnahme 10 ist Π-förmig ausgeführt, wobei die Schenkel die Mitnahmeelemente 11 bilden.

Hierbei ist an der Innenseite der Schaltbetätigungsaufnahme 10, ein Blech 33 aus Federstahl eingelegt, welches radial nach innen ragende Federlaschen 34 aufweist, die in Mittelstellung des Schaltelementes 1 an den inneren Stirnflächen der Schaltmuffenhälften 8, 9 anliegen (linkes Bild in Figur 10). Die Federlaschen 34 sind jeweils nur in eine Richtung schwenkbar, nämlich in Richtung auf das Mitnahmeelement 11 für die der jeweiligen Federlasche 34 zugeordnete Schaltmuffenhälfte. Das Blech 33 wird gemäß der Erfindung gegen eine axiale Bewegung relativ zu Schaltbetätigungsaufnahme 10, durch das beidseitige Anliegen an den Innenseiten der Mitnahmeelemente 11 der Schaltbetätigungsaufnahme 10 gesichert.

Die Funktionsweise des in Figur 10 gezeigten Schaltelementes wird im folgenden am Beispiel "linker Gang aus- und wieder einrücken" erläutert. Das Ausrücken des Ganges erfolgt durch die axiale Bewegung der Mitnahmeelemente 11 der Schaltbetätigungsaufnahme 10. Wird nun der linke Gang ausgelegt, weicht (oder knickt) die Federlasche 34 welche, an der inneren Stirnfläche der rechten Schaltmuffenhälfte 8 anliegt, radial nach außen über diese aus, so dass die rechte Schältmuffenhälfte 8 dabei nicht mitbewegt wird. Dies wird im rechten Bild der Figur 10 veranschaulicht.

Wenn nun der linke Gang durch eine Bewegung der Schaltmuffenaufnahme 10 nach links zurück in die Neutrallage wieder eingelegt wird, dann nimmt die Schaltmuffenaufnahme 10 die linke Schaltmuffenhälfte 9 über die heruntergeklappte, an der linken Schaltmuffenhälfte 9 anliegende Federlasche 34 mit. Wenn die Schaltbetätigungsaufnahme 10 in die Mittelstellung zurückgekehrt ist, kann nun die rechte Federlasche 34 radial nach innen klappen, wodurch der Ausgangszustand wieder hergestellt ist.

Beim in Figur 11 gezeigten Schaltelement wird die Mitnahme der Momentführenden Schaltmuffenhälfte dadurch verhindert, dass durch Verkippen von am Umfang des Synchronkörpers 4 verteilten Kippsteinen 35, die auszurückende Schaltmuffenhälfte axial freigegeben wird. Die Schaltbetätigungsaufnahme 10 ist Π-förmig ausgeführt, wobei die Schenkel die Mitnahmeelemente 11 bilden.

Gemäß der Erfindung sind die Kippsteine 35 in Nuten 36 im Synchronkörper 4 kippbar angeordnet, so dass die Enden der Kippsteine 35 bei Verkippen radial nach außen bzw. innen schwenken. Des weiteren sind an den Kippsteinen 35 Mitnehmer 37 vorgesehen, die in Nuten 38 an der Innseite der Schaltbetätigungsaufnahme 10 eingreifen, so dass bei einer Bewegung der Schaltbetätigungsaufnahme 10, die Kippsteine 35 um ihre Lagerung im Synchronkörper 4 geschwenkt werden können. In der Mittelstellung sind die Nuten 36 und die Nuten 38 übereinander angeordnet. Für den Fall, dass das Schaltelement als Klauenschaltelement ohne Synchronringe aufgebaut ist, sind die Nuten 36 in einem wellenfest angeordneten Teil des Klauenschaltelementes angebracht.

Die Funktionsweise des in Figur 11 gezeigten Schaltelementes wird im folgenden am Beispiel "linker Gang aus- und wieder einrücken" erläutert. Das Ausrücken des Ganges erfolgt durch die axiale Bewegung der Mitnahmeelemente 11 der Schaltbetätigungsaufnahme 10. Das linke obere Bild in Figur 9 zeigt die Schaltbetätigungsaufnahme 10 in der Mittelstellung.

Wenn nun der linke Gang ausgelegt werden soll, werden bei einer Mitnahme der linken Schaltmuffenhälfte 9 durch das Mitnahmeelement 11 an der Schaltbetätigungsaufnahme 10 gleichzeitig auch die Kippsteine 35 geschwenkt. Dieser Kippvorgang gibt erfindungsgemäß für die linke zu bewegende Schaltmuffenhälfte 9 axialen Weg frei; sie kann nun ausgerückt werden, ohne dass die Kippsteine 35 den Weg blockieren. Da die rechte momentführende Schaltmuffenhälfte 8 still steht und sich damit ihr Abstand zu dem Kipppunkt der Kippsteine 35 nicht verändert, kann der rechte Flügel der Kippsteine ungehindert an der rechten Schaltmuffenhälfte 8 radial nach innen vorbeischwenken, wie im rechten oberen Bild in Figur 11 gezeigt.

Soll nun der linke Gang wieder eingelegt werden, wird die Schaltbetätigungsaufnahme 10, wie im rechten unteren Bild der Figur 11 dargestellt, nach links zurück in die Mittelstellung bewegt, wobei die Kippsteine 35 wieder zurück in deren Ausgangslage geschwenkt werden. Bei dieser Verschwenkung der Kippsteine 35 kommen diese allerdings mit der linken ausgerückten Schaltmuffenhälfte 9 in Kontakt. Bei einer weiteren Verschiebung der Schaltbetätigungsaufnahme 10 nach links schieben die zurückschwenkenden Kippsteine 35 die linke Schaltmuffenhälfte 9 nach links, um den linken Gang zu synchronisieren und einzulegen. Vorzugsweise weisen die inneren Stirnseiten der Schaltmuffenhälften 8, 9 eine Fase 39 auf, um die Kontaktbedingungen zu erleichtern.

Ein weiteres Beispiel eines erfindungsgemäßen Schaltelementes 1 ist Gegenstand der Figur 12. Hierbei wird analog zum Ausführungsbeispiel nach Figur 11 die Mitnahme der momentführenden Schaltmuffenhälfte dadurch verhindert, dass Schwenkkörper 40 vorgesehen sind, welche verdreht werden, um für die auszurückende Schaltmuffenhälfte axial Weg freizugeben. Im Unterschied zum Ausführungsbeispiel nach Figur 11 zeigen die Drehachsen der Schwenkkörper 40 radial nach außen, d.h. die Drehebenen der Schwenkkörper 40 liegen tangential am Umfang des Synchronkörpers 4; die Schwenkkörper 40 sind erfindungsgemäß drehbar im Synchronkörper 4 gelagert. Für den Fall, dass das Schaltelement als Klauenschaltelement ohne Synchronringe aufgebaut ist, sind die Schwenkkörper 40 in einem wellenfest angeordneten Teil des Klauenschaltelementes gelagert.

Das linke obere und untere Bild in Figur 12 zeigen eine Schnittansicht und eine Draufsicht bei Schnitt durch die Schaltbetätigungsaufnahme 10 des Schaltelementes in der Mittelstellung; das rechte obere und untere Bild zeigen eine Schnittansicht bzw. eine Draufsicht bei Schnitt durch die Schaltbetätigungsaufnahme 10 bei ausgerücktem linkem Gang.

Bei Bewegung der Schaltbetätigungsaufnahme 10 nach rechts wird die linke Schaltmuffe 9 über das linke Mitnahmeelement 11 an der Schaltbetätigungsaufnahme 10 nach rechts mitgenommen, wobei die Schwenkkörper 40, die über Mitnehmer 41 in Nuten 42 auf der Innenseite der Schaltbetätigungsaufnahme 10 eingreifen, aus ihrer Ausgangslage verdreht werden. Dadurch wird axial Weg freigegeben, um ein Ausrücken der linken Schaltmuffe 9 zu ermöglichen (rechtes oberes und unteres Bild).

Beim Zurückbewegen der Schaltbetätigungsaufnahme 10 in die Mittelstellung werden die Schwenkkörper 40 auch in ihre Ausgangslage zurück gedreht und drücken dabei auf die linke Schaltmuffenhälfte 9, um diese nach links zurück zu schieben, wodurch der linke Gang synchronisiert und eingelegt wird.

Selbstverständlich fällt auch jede konstruktive Ausbildung, insbesondere jede räumliche Anordnung der Bauteile des erfindungsgemäßen Schaltelementes an sich sowie zueinander und soweit technisch sinnvoll, unter den Schutzumfang der vorliegenden Ansprüche, ohne die Funktion des Schaltelementes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Schaltelement
- 2: Kupplungskörper
- 3: Synchronring
- 4: Synchronkörper
- 5: Schaltmuffe
- 6: Zahnrad
- 7: Zahnrad
- 8: Schaltmuffenhälfte
- 9: Schaltmuffenhälfte
- 10: Schaltbetätigungsaufnahme
- 11: Mitnahmeelement
- 12: Federelement
- 13: Federelement
- 14: Steg der Schaltbetätigungsaufnahme
- 15: Nut
- 16: Nut
- 17: Verdrängkörper
- 18: Fase
- 19: Rille
- 20: Federblech
- 21: Federlasche
- 22: Auswerfverzahnung
- 23: Öffnung
- 24: Schrägverzahnung am Synchronkörper
- 25: Innenschrägverzahnung der Schaltbetätigungsaufnahme
- 26: Steg der Schaltbetätigungsaufnahme
- 27: Klaue
- 28: Kugel
- 29: Sicherungsring
- 30: Nut
- 31: Nut
- 32: Lasche
- 33: Blech
- 34: Federlasche
- 35: Kippstein
- 36: Nut
- 37: Mitnehmer
- 38: Nut
- 39: Fase
- 40: Schwenkkörper
- 41: Mitnehmer
- 42: Nut

## Patentansprüche

1. Schaltelement umfassend zumindest drei Schaltstellungen zum Schalten von zwei Übersetzungsstufen, bei dem in einer ersten Endlage, die einer ersten Schaltstellung entspricht, die erste Übersetzungsstufe geschaltet ist, in einer zweiten Endlage, die einer zweiten Schaltstellung entspricht, die zweite Übersetzungsstufe geschaltet ist, und in der Mittelstellung, die einer dritten Schaltstellung entspricht, beide Übersetzungsstufen geschaltet sind, wobei das Schaltelement als Synchronisiervorrichtung oder als Klauenschaltelement ausgebildet ist, wobei es eine Schaltmuffe umfasst, welche geteilt ausgeführt ist und zwei Schaltmuffenhälften (8, 9) aufweist, so dass nur diejenige Schaltmuffenhälfte (8, 9) bewegt werden muss, mit der die dazugehörige Übersetzungsstufe aus- oder eingelegt werden soll, wobei die andere Schaltmuffenhälfte (8, 9) der eingelegten und dabei momentführenden Übersetzungsstufe unberührt bleibt, **dadurch gekennzeichnet, dass** das Schaltelement nur eine Schaltbetätigungsaufnahme (10) aufweist, welche das Bindungsglied des Schaltelements zu einer Schaltbetätigung darstellt und für beide Schaltmuffenhälften (8, 9) vorgesehen ist, wobei die Mitnahme der beiden Schaltmuffenhälften (8, 9) entkoppelt ist, so dass je nach Position und Richtung der Bewegung der Schaltbetätigung entweder die eine oder die andere Schaltmuffenhälfte (8, 9) mitgenommen wird.

2. Schaltelement nach Anspruch 1, **dadurch gekennzeichnet, dass** die zwei Schaltmuffenhälften (8, 9) jeweils einer Übersetzungsstufe (6, 7) zugeordnet sind, wobei die Schaltbetätigung drei Stellungen aufweist , wobei in der Mittelstellung die Klaueninnenverzahnungen der Schaltmuffenhälften (8, 9) in die Klauenaußenverzahnungen der Kupplungskörper (2) der der jeweiligen Schaltmuffenhälfte (8, 9) zugeordneten Übersetzungsstufe (6, 7) eingreifen.

3. Schaltelement nach Anspruch 2, **dadurch gekennzeichnet, dass** die Schaltbetätigungsaufnahme (10) für jede Schaltmuffenhälfte (8, 9) ein Mitnahmeelement (11) aufweist, durch das das Ausrücken des der jeweiligen Schaltmuffenhälfte zugeordneten Ganges erfolgt, wobei die Ab- und Ankopplung der Schaltmuffenhälften (8, 9) beim Schalten des Schaltelementes (1) durch in der Schaltbetätigungsaufnahme (10) vorgesehene Mittel erfolgt.

4. Schaltelement nach Anspruch 3, **dadurch gekennzeichnet, dass** die Schaltbetätigungsaufnahme (10) Π-förmig ausgeführt ist und einen mittig angeordneten Steg (14) aufweist, wobei die Schenkel die Mitnahmeelemente (11) bilden, wobei an der Innenseite der Schaltbetätigungsaufnahme (10) zwischen dem mittleren Steg (14) der Schaltbetätigungsaufnahme (10) und den inneren Stirnseiten beider Schaltmuffenhälften (8, 9) axial wirkende Federelemente (12, 13) angebracht sind, derart, dass wenn beim Ausrücken eines Ganges die Schaltbetätigungsaufnahme (10) bewegt wird und die dem Gang zugeordnete Schaltmuffenhälfte über das Mitnahmeelement (11) mitnimmt, das zwischen dem Steg (14) und der anderen Schaltmuffenhälfte angeordnete Federelement zur Aufnahme der Bewegung der Schaltbetätigungsaufnahme (10) komprimiert wird, wodurch die andere Schaltmuffenhälfte unbewegt bleibt, wobei beim Wiedereinlegen eines Ganges die dem Gang zugeordnete Schaltmuffenhälfte durch die Bewegung der Schaltbetätigungsaufnahme (10) über die Federkraft des zwischen dem Steg (14) und der dem Gang zugeordneten Schaltmuffenhälfte angeordneten Federelementes in die Mittelstellung geschoben wird.

5. Schaltelement nach Anspruch 4, **dadurch gekennzeichnet, dass** die Federkraft auf die Schaltmuffenhälften (8, 9) an einem Sicherungsring oder am der jeweiligen Schaltmuffenhälfte (8, 9) zugeordneten Zahnrad (6, 7) abgestützt wird.

6. Schaltelement nach Anspruch 4 oder 5, **dadurch gekennzeichnet, dass** die Federelemente (12, 13) derart ausgelegt sind, dass die Federkraft mindestens so groß ist, wie die zur Synchronisierung und/oder Einrückung der Klauenverzahnung erforderliche Kraft.

7. Schaltelement nach Anspruch 3, **dadurch gekennzeichnet, dass** die Schaltbetätigungsaufnahme (10) an der den Schaltmuffenhälften (8, 9) zugewandten Seite zwei Nuten (15, 16) aufweist, in die ein Verdrängkörper (17) drückbar ist, wobei die inneren Stirnseiten der Schaltmuffenhälften (8, 9) Fasen (18) aufweisen, über die der Verdrängkörper (17) bei Betätigung der Schaltbetätigungsaufnahme (10) zum Freigeben von axialem Weg für die Bewegung der mitgenommenen Schaltmuffenhälfte über die Fasen (18) radial in eine der beiden Nuten (15, 16) führbar ist, wobei in der Neutralposition der Verdrängkörper (17) zwischen den beiden inneren Stirnseiten der Schaltmuffenhälften (8, 9) angeordnet ist.

8. Schaltelement nach Anspruch 7, **dadurch gekennzeichnet, dass** beim Ausrücken eines Ganges die Abstützkraft des Verdrängkörpers (17) von der jeweils von der Schaltbetätigungsaufnahme (10) nicht mitgenommenen Schaltmuffenhälfte aufgenommen wird, wobei sich die nicht mitgenommene Schaltmuffenhälfte an einem vorgesehenen Sicherungsring (29) oder alternativ direkt am der Schaltmuffenhälfte zugeordneten Zahnrad abstützt.

9. Schaltelement nach Anspruch 7 oder 8, **dadurch gekennzeichnet, dass** beim Wiedereinlegen eines Ganges die für die Synchronisierung und/oder das Einrücken notwendige Kraft über den Verdrängkörper (17) übertragbar ist, welcher nach Beendigung des Synchronvorganges in die Ursprungsstellung zwischen den Schaltmuffenhälften (8, 9) gedrückt wird.

10. Schaltelement nach Anspruch 9, **dadurch gekennzeichnet, dass** der Verdrängkörper (17) in einem Federring angeordnet ist, was in einer radial nach innen wirkende Federkraft zur Rückholung des Verdrängkörpers (17) nach dem Schalten in die Mittelstellung und Beendigung des Synchronvorganges resultiert.

11. Schaltelement nach Anspruch 7, 8 oder 9, **dadurch gekennzeichnet, dass** der Verdrängkörper (17) als Kugel ausgeführt ist.

12. Schaltelement nach Anspruch 7, 8 oder 9, **dadurch gekennzeichnet, dass** der Verdrängkörper (17) an der der Schaltbetätigungsaufnahme (10) abgewandten Seite konisch und an der der Schaltbetätigungsaufnahme (10) zugewandten Seite zylindrisch oder quaderförmig ausgeführt ist, wobei die Nuten (15, 16) in der Schaltbetätigungsaufnahme (10) der Form des Verdrängkörpers (17) angepasst ausgebildet sind.

13. Schaltelement nach Anspruch 11, **dadurch gekennzeichnet, dass**, um ein Gleiten der Kugel (17) entlang der Fasen (18) der Schaltmuffenhälften (8, 9) und der jeweiligen Nut (15, 16) in der Schaltbetätigungsaufnahme (10) zu vermeiden, in den Fasen (18) der Schaltmuffenhälften (8, 9) und in den Nuten (15, 16) Rillen (19) vorgesehen sind.

14. Schaltelement nach Anspruch 11 oder 12, **dadurch gekennzeichnet, dass** in der Innenseite der Schaltbetätigungsaufnahme (10) ein Federblech (20) umfassend Federlaschen (21) eingelegt bzw. angeordnet ist, welches gegen eine axiale Bewegung relativ zu Schaltbetätigungsaufnahme (10) durch das beidseitige Anliegen an den Innenseiten der Mitnahmeelemente (11) der Schaltbetätigungsaufnahme (10) gesichert ist, wobei die Federlaschen (21) derart angeordnet sind, dass sie beim radialen Ausweichen eines Verdrängkörpers (17) in eine der Nuten (15, 16) in der Schaltbetätigungsaufnahme (10) beim Ausrücken eines Ganges vorgespannt werden, wodurch beim Einrücken des Ganges die Verdrängkörper (17) in den Raum zwischen den Schaltmuffen (8, 9) zurückgedrängt werden.

15. Schaltelement nach Anspruch 11 oder 12, **dadurch gekennzeichnet, dass** stirnseitig an den Zahnrädern (6, 7) oder an den Kupplungskörpem (2) stirnseitig Auswerferzähne einer Auswerfverzahnung (22) angeordnet sind, so dass, beim Verschieben der Schaltbetätigungsaufnahme (10) in die Mittelstellung ab einer vorgegebenen axialen Stellung der Schaltbetätigungsaufnahme (10) die Zähne der Auswerfverzahnung (22) in die Schaltbetätigungsaufnahme (10) über vorgesehene Öffnungen (23) eindringen und dadurch die Verdrängkörper (17) zum radialen Ausweichen nach innen und damit in den Raum zwischen den Schaltmuffenhälften (8, 9) zwingen.

16. Schaltelement nach Anspruch 3, **dadurch gekennzeichnet, dass** die Schaltbetätigungsaufnahme (10) Π-förmig ausgeführt ist und einen mittig angeordneten Steg (26) aufweist, wobei die Schenkel die Mitnahmeelemente (11) bilden, wobei, um bei einer Schaltung eine Mitbewegung der anderen Schaltmuffenhälfte zu vermeiden, der axialen Bewegung der Schaltbetätigungsauf nahme (10) eine Drehbewegung überlagert wird, welche durch eine Schrägverzahnung (24) am Synchronkörper (4) bzw. an einem wellenfest angeordneten Element des Schaltelementes erreicht wird, in der eine Innenschrägverzahnung (25) am Steg (26) der Schaltbetätigungsaufnahme (10) eingreift.

17. Schaltelement nach Anspruch 16, **dadurch gekennzeichnet, dass** an den Stirnseiten der Schaltmuffenhälften (8, 9) und an dem mittleren Steg (26) der Schaltbetätigungsaufnahme (10) stirnseitig Klauen (27) angebracht sind, die in der Mittelstellung eine definierte Drehlage zueinander haben, derart, dass bei einer Bewegung der Schaltbetätigungsaufnahme (10), die in einer Verdrehung der Schaltbetätigungsaufnahme (10) relativ zu dem Synchronkörper (4) bzw. zu einem wellenfest angeordneten Element des Schaltelementes und den Schaltmuffenhälften (8, 9) resultiert, sich die Winkelstellung der Klauen (27) zueinander derart ändert, dass die Klauen (27) an der der nicht zu schaltenden Schaltmuffenhälfte zugewandten Seite des Steges (26) der Schaltbetätigungsaufnahme (10) direkt neben den Klauen (27) dieser Schaltmuffenhälfte zur Freigabe von axialem Weg zu liegen kommen und die Klauen (27) an der der zu schaltenden Schaltmuffenhälfte zugewandten Seite des Steges (26) direkt gegenüber den Stirnseiten der Klauen (27) der zu schaltenden Schaltmuffenhälfte zu liegen kommen, um bei einer Schaltung in die Mittelstellung der geschalteten Schaltmuffenhälfte diese zurück in die Ausgangstellung zu schieben und dabei den Gang zu synchronisieren und einzurücken, wobei bei dieser Schiebebewegung eine relative Gleitbewegung an den Stirnseiten der Klauen (27) durch die Verdrehung stattfindet, so dass sich am Ende der Schiebebewegung die Klauen (27) wieder in der Ausgangsstellung befinden.

18. Schaltelement nach Anspruch 3, **dadurch gekennzeichnet, dass** die Schaltbetätigungsaufnahme (10) radial federnd ausgeführt ist und am Umfang angeordnete, radial ausfedernde Laschen (32) aufweist, die bei einer Bewegung der Schaltbetätigungsaufnahme (10) über die jeweils stillstehende Schaltmuffenhälfte radial nach außen ausweichen, wobei zur Ermöglichung der Ausweichbewegung Kugeln (28) vorgesehen sind, die in Nuten (30, 31) in den ausfedemden Laschen (32) in der Schaltbetätigungsaufnahme (10) und den Schaltmuffenhälften (8, 9) geführt werden.

19. Schaltelement nach Anspruch 18, **dadurch gekennzeichnet, dass** die Nuten (30, 31) in den ausfedemden Laschen (32) der Schaltbetätigungsaufnahme (10) und den Schaltmuffenhälften (8, 9) derart geformt sind, dass bei einer Betätigung der Schaltbetätigungsaufnahme (10) zum Ausrücken eines Ganges die der nicht zu schaltenden Schaltmuffenhälfte zugeordneten Kugeln (28) radial nach außen bewegt werden, wodurch die Schaltbetätigungsaufnahme (10) durch die Laschen (32) radial nach außen nachgibt, so dass die nicht zu schaltende Schaltmuffenhälfte nicht mitbewegt wird.

20. Schaltelement nach Anspruch 19, **dadurch gekennzeichnet, dass** die Federkraft, die dabei über die Kugeln (28) auf die nicht zu schaltende Schaltmuffenhälfte wirkt an einem Sicherungsring (29) oder alternativ am nicht zu schaltenden Schaltmuffenhälfte zugeordneten Zahnrad abgestützt wird.

21. Schaltelement nach Anspruch 19 oder 20, **dadurch gekennzeichnet, dass** die Federkraft in den federnden Laschen (32) der Schaltbetätigungsaufnahme (10) so groß gewählt ist, dass sie bei der Synchronisation und/oder dem Einlegen eines Ganges die Kugeln (28) sicher in den Nuten (30, 31) hält.

22. Schaltelement nach Anspruch 3, **dadurch gekennzeichnet, dass** die Schaltbetätigungsaufnahme (10) Π-förmig ausgeführt ist, wobei die Schenkel die Mitnahmeelemente (11) bilden, wobei an der Innenseite der Schaltbetätigungsaufnahme (10) ein an den Innenseiten der Mitnahmeelemente (11) anliegendes Blech (33) aus Federstahl eingelegt ist, weiches radial nach innen ragende Federlaschen (34) aufweist, die in Richtung auf das Mitnahmeelement (11) für die der jeweiligen Federlasche (34) zugeordnete Schaltmuffenhälfte schwenkbar sind und in Mittelstellung des Schaltelementes (1) an den inneren Stirnflächen der Schaltmuffenhälften (8, 9) anliegen, derart, dass bei einer axialen Bewegung der Schaltbetätigungsaufnahme (10) die Federlasche (34), die an der inneren Stirnfläche der nicht zu schaltenden Schaltmuffenhälfte anliegt, radial nach außen über diese ausweicht, wodurch eine Bewegung der nicht zu schaltenden Schaltmuffenhälfte vermieden wird, wobei bei einer Schaltung in die Mittelstellung die Schaltmuffenaufnahme (10) die zu schaltende Schaltmuffenhälfte über die heruntergeklappte, an der zu schaltenden Schaltmuffenhälfte anliegende Federlasche mitnimmt und wobei, wenn die Schaltbetätigungsaufnahme (10) in die Mittelstellung zurückgekehrt ist, die radial nach außen über die nicht zu schaltende Schaltmuffenhälfte liegende Federlasche radial nach innen geklappt wird, wodurch der Ausgangszustand wieder hergestellt ist.

23. Schaltelement nach Anspruch 3, **dadurch gekennzeichnet, dass** für den Fall eines Synchronisierung die Schaltbetätigungsaufnahme (10) Π-förmig ausgeführt ist, wobei die Schenkel die Mitnahmeelemente (11) bilden und zum Verhindern der Mitnahme der nicht zu schaltenden Schaltmuffenhälfte Kippsteine (35) vorgesehen sind, die in Nuten (36) im Synchronkörper (4) bzw. in einem wellenfest angeordneten Element des Schaltelementes kippbar angeordnet sind, wobei an den Kippsteinen (35) Mitnehmer (37) vorgesehen sind, die in Nuten (38) an der Innseite der Schaltbetätigungsaufnahme (10) eingreifen und in der Mittelstellung die Nuten (36) und die Nuten (38) übereinander angeordnet sind, wobei bei einer Bewegung der Schaltbetätigungsaufnahme (10) zum Auslegen eines Ganges die Kippsteine (35) um ihre Lagerung im Synchronkörper (4) bzw. in einem wellenfest angeordneten Element des Schaltelementes zur Freigabe von axialem Weg für die zu schaltende Schaltmuffenhälfte geschwenkt werden wobei der der nicht zu schaltenden Schaltmuffenhälfte zugewandte Flügel der Kippsteine (35) ungehindert an der nicht zu schaltenden Schaltmuffenhälfte radial nach innen vorbeischwenkt und wobei bei einer Schaltung in die Mittelstellung die Kippsteine (35) durch die Bewegung der Schaltbetätigungsaufnahme (10) mit der zu bewegenden Schaltmuffenhälfte in Kontakt kommen und diese verschieben, um den Gang zu synchronisieren und einzulegen.

24. Schaltelement nach Anspruch 23, **dadurch gekennzeichnet, dass** die inneren Stirnseiten der Schaltmuffenhälften (8, 9) eine Fase (39) aufweisen.

25. Schaltelement nach Anspruch 3, **dadurch gekennzeichnet, dass** die Schaltbetätigungsaufnahme (10) Π-förmig ausgeführt ist, wobei die Schenkel die Mitnahmeelemente (11) bilden, wobei zum Verhindern der Mitnahme der nicht zu schaltenden Schaltmuffenhälfte im Synchronkörper (4) bzw. in einem wellenfest angeordneten Element des Schaltelementes drehbar gelagerte Schwenkkörper (40) vorgesehen sind, die über Mitnehmer (41) in Nuten (42) auf der Innenseite der Schaltbetätigungsaufnahme (10) eingreifen und deren Drehebenen tangential am Umfang des Synchronkörpers (4) bzw. eines wellenfest angeordneten Elementes des Schaltelementes liegen, wobei bei einer Bewegung der Schaltbetätigungsaufnahme (10) die Schwenkkörper (40) verdreht werden, um für die zu schaltende Schaltmuffenhälfte axial Weg freizugeben, ohne die nicht zu schaltende Schaltmuffenhälfte zu bewegen, wobei bei einer Schaltung in die Mittelstellung die Schwenkkörper (40) durch die Bewegung der Schaltbetätigungsaufnahme (10) mit der zu bewegenden Schaltmuffenhälfte in Kontakt kommen und diese verschieben, um den Gang zu synchronisieren und einzulegen.

## Claims

1. Shifting element, comprising at least three shift positions for shifting two gear ratios, in which, in a first end position which corresponds to a first shift position, the first gear ratio is shifted and, in a second end position which corresponds to a second shift position, the second gear ratio is shifted, and, in the middle position which corresponds to a third shift position, both gear ratios are shifted, the shifting element being designed as a synchronizing device or as a dog-type shifting element, and comprising a shift sleeve which is of split form and has two shift-sleeve halves (8, 9), so that only that shift-sleeve half (8, 9), by means of which the associated gear ratio is to be deselected or selected, has to be moved, the other shift-sleeve half (8, 9) of the selected and at the same time torque-carrying gear ratio remaining unaffected, **characterized in that** the shifting element has only one shift-actuation receptacle (10) which constitutes the tie-up member of the shifting element for shift actuation and which is provided for both shift-sleeve halves (8, 9), the drive of the two shift-sleeve halves (8, 9) being decoupled so that, depending on the position and direction of movement of shift actuation, either one or the other shift-sleeve half (8, 9) is driven.

2. Shifting element according to Claim 1, **characterized in that** the two shift-sleeve halves (8, 9) are assigned in each case to a gear ratio (6, 7), shift actuation having three positions, in the middle position the dog internal toothings of the shift-sleeve halves (8, 9) engaging into the dog external toothings of the clutch bodies (2) of the gear ratio (6, 7) assigned to the respective shift-sleeve half (8, 9).

3. Shifting element according to Claim 2, **characterized in that** the shift-actuation receptacle (10) for each shift-sleeve half (8, 9) has a driving element (11), by means of which the disengagement of the gear assigned to the respective shift-sleeve half takes place, the uncoupling and coupling of the shift-sleeve halves (8, 9) during the shifting of the shifting elements (1) taking place by means provided in the shift-actuation receptacle (10).

4. Shifting element according to Claim 3, **characterized in that** the shift-actuation receptacle (10) is of Π-shaped form and has a centrally arranged web (14), the legs forming the driving element (11), axially acting spring elements (12, 13) being mounted on the inside of the shift-actuation receptacle (10) between the middle web (14) of the shift-actuation receptacle (10) and the inner end faces of the two shift-sleeve halves (8, 9), in such a way that, when the shift-actuation receptacle (10) is moved during the disengagement of a gear and drives via the driving element (11) the shift-sleeve half assigned to the gear, the spring element arranged between the web (14) and the other shift-sleeve half is compressed in order to absorb the movement of the shift-actuation receptacle (10), with the result that the other shift-sleeve half remains unmoved, and, when a gear is reselected, the shift-sleeve half assigned to the gear is pushed into the middle position by means of the movement of the shift-actuation receptacle (10) via the spring force of the spring element arranged between the web (14) and the shift-sleeve half assigned to the gear.

5. Shifting element according to Claim 4, **characterized in that** the spring force upon the shift-sleeve halves (8, 9) is supported on a securing ring or on the gearwheel (6, 7) assigned to the respective shift-sleeve half (8, 9).

6. Shifting element according to Claim 4 or 5, **characterized in that** the spring elements (12, 13) are designed in such a way that the spring force is at least as high as the force required for synchronizing and/or engaging the dog toothing.

7. Shifting element according to Claim 3, **characterized in that** the shift-actuation receptacle (10) has, on the side facing the shift-sleeve halves (8, 9), two grooves (15, 16), into which a displacement body (17) can be pressed, the inner end faces of the shift-sleeve halves (8, 9) having chamfers (18), via which, when the shift-actuation receptacle (10) is actuated, the displacement body (17) can be guided radially into one of the two grooves (15, 16) via the chamfers (18) in order to enable axial travel for the movement of the driven shift-sleeve half, in the neutral position the displacement body (17) being arranged between the two inner end faces of the shift-sleeve halves (8, 9).

8. Shifting element according to Claim 7, **characterized in that**, during the disengagement of a gear, the supporting force of the displacement body (17) is absorbed by the shift-sleeve half which in each case is not driven by the shift-actuation receptacle (10), the non-driven shift-sleeve half being supported on a securing ring (29) provided or, alternatively, directly on the gearwheel assigned to the shift-sleeve half.

9. Shifting element according to Claim 7 or 8, **characterized in that**, when a gear is reselected, the force necessary for synchronizing and/or engagement can be transmitted via the displacement body (17) which, after the end of the synchronizing operation, is pressed into the original position between the shift-sleeve halves (8, 9).

10. Shifting element according to Claim 9, **characterized in that** the displacement body (17) is arranged in a spring ring, thus resulting in a radially inward-acting spring force for recovering the displacement body (17) after the shift into the middle position and the end of the synchronizing operation.

11. Shifting element according to Claim 7, 8 or 9, **characterized in that** the displacement body (17) is in the form of a ball.

12. Shifting element according to Claim 7, 8 or 9, **characterized in that** the displacement body (17) is of conical form on the side facing away from the shift-actuation receptacle (10) and is of cylindrical or parallelepipedal form on the side facing the shift-actuation receptacle (10), the grooves (15, 16) in the shift-actuation receptacle (10) being designed to be adapted to the shape of the displacement body (17).

13. Shifting element according to Claim 11, **characterized in that**, in order to prevent the ball (17) from sliding along the chamfers (18) of the shift-sleeve halves (8, 9) and the respective groove (15, 16) in the shift-actuation receptacle (10), channels (19) are provided in the chamfers (18) of the shift-sleeve halves (8, 9) and in the grooves (15, 16).

14. Shifting element according to Claim 11 or 12, **characterized in that** a spring plate (20) comprising spring tabs (21) is introduced or arranged in the inside of the shift-actuation receptacle (10) and is secured against axial movement in relation to the shift-actuation receptacle (10) by bearing on both sides against the insides of the driving elements (11) of the shift-actuation receptacle (10), the spring tabs (21) being arranged in such a way that they are prestressed when a displacement body (17) moves radially into one of the grooves (15, 16) in the shift-actuation receptacle (10) during the disengagement of a gear, as a result of which the displacement bodies (17) are forced back into the space between the shift sleeves (8, 9) when the gear is engaged.

15. Shifting element according to Claim 11 or 12, **characterized in that** ejector teeth of an ejection toothing (22) are arranged on the end faces of the gearwheels (6, 7) or on the end faces of the clutch bodies (2), so that, when the shift-actuation receptacle (10) is displaced into the middle position, beyond a stipulated axial position of the shift-actuation receptacle (10) the teeth of the ejection toothing (22) penetrate into the shift-actuation receptacle (10) via orifices (23) provided and thereby force the displacement bodies (17) to move radially inwards and consequently into the space between the shift-sleeve halves (8, 9).

16. Shifting element according to Claim 3, **characterized in that** the shift-actuation receptacle (10) is of Π-shaped form and has a centrally arranged web (26), the legs forming the driving elements (11), and, in order to avoid a co-movement of the other shift-sleeve half during a shift, the axial movement of the shift-actuation receptacle (10) having superposed on it a rotational movement which is achieved by means of a helical toothing (24) on the synchronizing body (4) or on an element of the shifting element which is arranged fixedly with respect to a shaft, in which helical toothing an internal helical toothing (25) on the web (26) of the shift-actuation receptacle (10) engages.

17. Shifting element according to Claim 16, **characterized in that** dogs (27) are attached to the end faces of the shift-sleeve halves (8, 9) and to the middle web (26) of the shift-actuation receptacle (10) on the end faces and, in the middle position, have a defined rotary position with respect to one another, in such a way that, during a movement of the shift-actuation receptacle (10) which results in a rotation of the shift-actuation receptacle (10) in relation to the synchronizing body (4) or to an element of the shifting element which is arranged fixedly with respect to a shaft and in relation to the shift-sleeve halves (8, 9), the angular position of the dogs (27) with respect to one another changes in such a way that the dogs (27) on that side of the web (26) of the shift-actuation receptacle (10) which faces the shift-sleeve half not to be shifted come to lie directly next to the dogs (27) of this shift-sleeve half in order to enable an axial travel and the dogs (27) on that side of the web (26) which faces the shift-sleeve half to be shifted come to lie directly opposite the end faces of the dogs (27) of the shift-sleeve half to be shifted, in order, during a shift into the middle position of the shifted shift-sleeve half, to push the latter back into the initial position at the same time to synchronize and engage the gear, during this pushing movement a relative sliding movement taking place on the end faces of the dogs (27) as a result of rotation, so that, at the end of the pushing movement, the dogs (27) are located in the initial position again.

18. Shifting element according to Claim 3, **characterized in that in that** the shift-actuation receptacle (10) is of radially resilient form and has tabs (32) which are arranged on the circumference and springing out radially which, during a movement of the shift-actuation receptacle (10), move radially outwards over the in each case stationary shift-sleeve half, there being provided, for allowing the movement, balls (28) which are guided in grooves (30, 31) in the spring-out tabs (32) in the shift-actuation receptacle (10) and the shift-sleeve halves (8, 9).

19. Shifting element according to Claim 18, **characterized in that** the grooves (30, 31) in the spring-out tabs (32) of the shift-actuation receptacle (10) and the shift-sleeve halves (8, 9) are shaped in such a way that, when the shift-actuation receptacle (10) is actuated in order to disengage a gear, the balls (28) assigned to the shift-sleeve half not to be shifted are moved radially outwards, with the result that the shift-actuation receptacle (10) yields radially outwards due to the tabs (32), so that the shift-sleeve half not to be shifted is not co-moved.

20. Shifting element according to Claim 19, **characterized in that** the spring force which in this case acts via the balls (28) upon the shift-sleeve half not to be shifted is supported on a securing ring (29) or, alternatively, on the gearwheel assigned to the shift-sleeve half not to be shifted.

21. Shifting element according to Claim 19 or 20, **characterized in that** the spring force selected in the resilient tabs (32) of the shift-actuation receptacle (10) is so high that it holds the balls (28) securely in the grooves (30, 31) during the synchronization and/or selection of a gear.

22. Shifting element according to Claim 3, **characterized in that** the shift-actuation receptacle (10) is of Π-shaped form, the legs forming the driving elements (11), there being introduced on the inside of the shift-actuation receptacle (10) a plate (33) made from spring steel, which bears against the insides of the driving elements (11) and which has radially inward-projecting spring tabs (34) which are pivotable in the direction towards the driving element (11) for the shift-sleeve half assigned to the respective spring tab (34) and, in the middle position of the shifting element (1), bear against the inner end faces of the shift-sleeve halves (8, 9), in such a way that, during an axial movement of the shift-actuation receptacle (10), the spring tab (34) which bears against the inner end face of the shift-sleeve half not to be shifted moves radially outwards over the latter, with the result that movement of the shift-sleeve half not to be shifted is avoided, and, during a shift into the middle position, the shift-actuation receptacle (10) driving the shift-sleeve half to be shifted via the swung-down spring tab bearing against the shift-sleeve half to be shifted, and, when the shift-actuation receptacle (10) has returned to the middle position, the spring tab which lies radially outwards over the shift-sleeve half not to be shifted being swung radially inwards, with the result that the initial state is restored.

23. Shifting element according to Claim 3, **characterized in that**, in the event of synchronization, the shift-actuation receptacle (10) is of Π-shaped form, the legs forming the driving elements (11) and, to prevent the shift-sleeve half not to be shifted from being driven, tilting blocks (35) being provided, which are arranged tiltably in grooves (36) in the synchronizing body (4) or in an element of the shifting element which is arranged fixedly with respect to a shaft, there being provided on the tilting blocks (35) drivers (37) which engage into grooves (38) on the inside of the shift-actuation receptacle (10), and in the middle position the grooves (36) and the grooves (38) being arranged one above the other, and, during a movement of the shift-actuation receptacle (10) to deselect a gear, the tilting blocks (35) being pivoted about their mounting in the synchronizing body (4) or in an element of the shifting element which is arranged fixedly with respect to a shaft, in order to enable axial travel for the shift-sleeve half to be shifted, and those wings of the tilting blocks (35) which face the shift-sleeve half not to be shifted being pivoted radially inwards, unimpeded, past the shift-sleeve half not to be shifted, and, during a shift into the middle position, the tilting blocks (35) coming into contact, as a result of the movement of the shift-actuation receptacle (10), with the shift-sleeve half to be moved and displacing the latter, in order to synchronize and select the gear.

24. Shifting element according to Claim 23, **characterized in that** the inner end faces of the shift-sleeve halves (8, 9) are a chamfer (39).

25. Shifting element according to Claim 3, **characterized in that** the shift-actuation receptacle (10) is of Π-shaped form, the legs forming the driving elements (11), and, to prevent the shift-sleeve half not to be shifted from being driven, pivoting bodies (40) being provided which are mounted rotatably in the synchronizing body (4) or in an element of the shifting element which is arranged fixedly with respect to a shaft and which engage via drivers (41) into grooves (42) on the insides of the shift-actuation receptacle (10) and the planes of rotation of which lie tangentially to the circumference of the synchronizing body (4) or of an element of the shifting element which is arranged fixedly with respect to a shaft, and, during a movement of the shift-actuation receptacle (10), the pivoting bodies (40) being rotated, in order to enable axial travel for the shift-sleeve half to be shifted, without the shift-sleeve half not to be shifted being moved, and, during a shift into the middle position, the pivoting bodies (40) coming into contact, as a result of the movement of the shift-actuation receptacle (10), with the shift-sleeve half to be moved and displacing the latter, in order to synchronize and select the gear.

## Revendications

1. Élément de changement de vitesses comportant au moins trois positions de changement de vitesses pour engager deux étages de transmission, dans lequel le premier étage de transmission est engagé dans une première position finale qui correspond à une première position de changement de vitesses, le deuxième étage de transmission est engagé dans une deuxième position finale qui correspond à une deuxième position de changement de vitesses, et les deux étages de transmission sont engagés dans la position centrale qui correspond à une troisième position de changement de vitesses, l'élément de changement de vitesses étant réalisé sous forme de dispositif de synchronisation ou sous forme d'élément de changement de vitesses à griffes, l'élément de changement de vitesses comportant un manchon de changement de vitesses, lequel est réalisé de manière divisée et comprend deux moitiés de manchon de changement de vitesses (8, 9), de telle sorte que seule la moitié de manchon de changement de vitesses (8, 9) à l'aide de laquelle l'étage de transmission associé doit être désenclenché ou enclenché ne doive être déplacée, l'autre moitié de manchon de changement de vitesses (8, 9) de l'étage de transmission enclenché et transmettant en l'occurrence un couple demeurant non affectée, **caractérisé en ce que** l'élément de changement de vitesses ne comprend qu'un logement d'actionnement de changement de vitesses (10), lequel constitue l'organe de liaison de l'élément de changement de vitesses pour un actionnement de changement de vitesses et est prévu pour les deux moitiés de manchon de changement de vitesses (8, 9), l'entraînement des deux moitiés de manchon de changement de vitesses (8, 9) étant désaccouplé, de sorte qu'en fonction de la position et du sens du déplacement de l'actionnement de changement de vitesses, soit l'une soit l'autre moitié de manchon de changement de vitesses (8, 9) soit entraînée.

2. Élément de changement de vitesses selon la revendication 1, **caractérisé en ce que** les deux moitiés de manchon de changement de vitesses (8, 9) sont respectivement associées à un étage de transmission (6, 7), l'actionnement de changement de vitesses comprenant trois positions, les dentures intérieures à griffes des moitiés de manchon de changement de vitesses (8, 9) s'engrenant, dans la position centrale, avec les dentures extérieures à griffes des corps d'accouplement (2) de l'étage de transmission (6, 7) associé à la moitié de manchon de changement de vitesses (8, 9) respective.

3. Élément de changement de vitesses selon la revendication 2, **caractérisé en ce que** le logement d'actionnement de changement de vitesses (10) pour chaque moitié de manchon de changement de vitesses (8, 9) comprend un élément d'entraînement (11) au moyen duquel s'effectue le désenclenchement du rapport associé à la moitié de manchon de changement de vitesses respective, le désaccouplement et l'accouplement des moitiés de manchon de changement de vitesses (8, 9) lors de l'engagement de l'élément de changement de vitesses (1) s'effectuant par le biais de moyens prévus dans le logement d'actionnement de changement de vitesses (10).

4. Élément de changement de vitesses selon la revendication 3, **caractérisé en ce que** le logement d'actionnement de changement de vitesses (10) est réalisé en forme de Π et comprend une nervure (14) disposée centralement, les branches formant les éléments d'entraînement (11), des éléments ressort (12, 13) agissant axialement étant montés sur le côté intérieur du logement d'actionnement de changement de vitesses (10) entre la nervure (14) centrale du logement d'actionnement de changement de vitesses (10) et les côtés frontaux intérieurs des deux moitiés de manchon de changement de vitesses (8, 9), de telle sorte que, lorsque le logement d'actionnement de changement de vitesses (10) est déplacé lors du désenclenchement d'un rapport et entraîne la moitié de manchon de changement de vitesses associée au rapport par le biais de l'élément d'entraînement (11), l'élément ressort disposé entre la nervure (14) et l'autre moitié de manchon de changement de vitesses est comprimé pour absorber le déplacement du logement d'actionnement de changement de vitesses (10), de sorte que l'autre moitié de manchon de changement de vitesses reste immobile et, lorsqu'un rapport est à nouveau enclenché, la moitié de manchon de changement de vitesses associée au rapport étant poussée jusqu'à la position centrale par le déplacement du logement d'actionnement de changement de vitesses (10) par le biais de la force de ressort de l'élément ressort disposé entre la nervure (14) et la moitié de manchon de changement de vitesses associée au rapport.

5. Élément de changement de vitesses selon la revendication 4, **caractérisé en ce que** la force de ressort sur les moitiés de manchon de changement de vitesses (8, 9) est supportée par une bague de fixation ou par la roue dentée (6, 7) associée à la moitié de manchon de changement de vitesses (8, 9) respective.

6. Élément de changement de vitesses selon la revendication 4 ou 5, **caractérisé en ce que** les éléments ressort (12, 13) sont conçus de telle sorte que la force de ressort soit au moins aussi grande que la force nécessaire pour la synchronisation et/ou l'enclenchement de la denture à griffes.

7. Élément de changement de vitesses selon la revendication 3, **caractérisé en ce que** le logement d'actionnement de changement de vitesses (10) comprend, sur le côté tourné vers les moitiés de manchon de changement de vitesses (8, 9), deux rainures (15, 16) dans lesquelles un corps de déplacement (17) peut être pressé, les côtés frontaux intérieurs des moitiés de manchon de changement de vitesses (8, 9) comprenant des chanfreins (18) par le biais desquels le corps de déplacement (17) peut être guidé radialement dans l'une des deux rainures (15, 16) par le biais des chanfreins (18) lors de l'actionnement du logement d'actionnement de changement de vitesses (10) pour libérer la voie axiale pour le déplacement de la moitié de manchon de changement de vitesses entraînée, le corps de déplacement (17) étant disposé, dans la position neutre, entre les deux côtés frontaux intérieurs des moitiés de manchon de changement de vitesses (8, 9).

8. Élément de changement de vitesses selon la revendication 7, **caractérisé en ce que**, lorsqu'un rapport est désenclenché, la force d'appui du corps de déplacement (17) est reprise par la moitié de manchon de changement de vitesses respectivement non entraînée par le logement d'actionnement de changement de vitesses (10), la moitié de manchon de changement de vitesses non entraînée étant supportée par une bague de fixation (29) prévue ou, en variante, directement par la roue dentée associée à la moitié de manchon de changement de vitesses.

9. Élément de changement de vitesses selon la revendication 7 ou 8, **caractérisé en ce que**, lorsqu'un rapport est à nouveau enclenché, la force nécessaire pour la synchronisation et/ou l'enclenchement peut être transmise par le biais du corps de déplacement (17) qui est pressé jusqu'à la position d'origine entre les moitiés de manchon de changement de vitesses (8, 9) à la fin de l'opération de synchronisation.

10. Élément de changement de vitesses selon la revendication 9, **caractérisé en ce que** le corps de déplacement (17) est disposé dans une bague ressort, ce qui résulte en une force de ressort agissant radialement vers l'intérieur pour rappeler le corps de déplacement (17) après l'engagement dans la position centrale et à la fin de l'opération de synchronisation.

11. Élément de changement de vitesses selon la revendication 7, 8 ou 9, **caractérisé en ce que** le corps de déplacement (17) est réalisé sous forme de bille.

12. Élément de changement de vitesses selon la revendication 7, 8 ou 9, **caractérisé en ce que** le corps de déplacement (17) est réalisé de manière conique sur le côté opposé au logement d'actionnement de changement de vitesses (10) et de manière cylindrique ou parallélépipédique sur le côté tourné vers le logement d'actionnement de changement de vitesses (10), les rainures (15, 16) dans le logement d'actionnement de changement de vitesses (10) étant réalisées de manière adaptée à la forme du corps de déplacement (17).

13. Élément de changement de vitesses selon la revendication 11, **caractérisé en ce que** des gorges (19) sont prévues dans les chanfreins (18) des moitiés de manchon de changement de vitesses (8, 9) et dans les rainures (15, 16) pour éviter un glissement de la bille (17) le long des chanfreins (18) des moitiés de manchon de changement de vitesses (8, 9) et de la rainure (15, 16) respective dans le logement d'actionnement de changement de vitesses (10).

14. Élément de changement de vitesses selon la revendication 11 ou 12, **caractérisé en ce qu'**une tôle à ressort (20) comportant des languettes élastiques (21) est insérée ou disposée dans le côté intérieur du logement d'actionnement de changement de vitesses (10), laquelle tôle à ressort est fixée de manière à empêcher un déplacement axial par rapport au logement d'actionnement de changement de vitesses (10) en s'appliquant des deux côtés contre les côtés intérieurs des éléments d'entraînement (11) du logement d'actionnement de changement de vitesses (10), les languettes élastiques (21) étant disposées de telle sorte qu'elles soient précontraintes lorsqu'un corps de déplacement (17) est dévié radialement dans l'une des rainures (15, 16) dans le logement d'actionnement de changement de vitesses (10) lors du désenclenchement d'un rapport, de sorte que, lors de l'enclenchement du rapport, les corps de déplacement (17) soient repoussés dans l'espace entre les manchons de changement de vitesses (8, 9).

15. Élément de changement de vitesses selon la revendication 11 ou 12, **caractérisé en ce que** des dents d'éjection d'une denture d'éjection (22) sont disposées du côté frontal sur les roues dentées (6, 7) ou du côté frontal sur les corps d'accouplement (2), de telle sorte que, lors du déplacement du logement d'actionnement de changement de vitesses (10) jusqu'à la position centrale, à partir d'une position axiale prédéfinie du logement d'actionnement de changement de vitesses (10), les dents de la denture d'éjection (22) pénètrent dans le logement d'actionnement de changement de vitesses (10) par des ouvertures (23) prévues et forcent ainsi les corps de déplacement (17) à être déviés radialement vers l'intérieur et par conséquent dans l'espace entre les moitiés de manchon de changement de vitesses (8, 9).

16. Élément de changement de vitesses selon la revendication 3, **caractérisé en ce que** le logement d'actionnement de changement de vitesses (10) est réalisé en forme de Π et comprend une nervure (26) disposée centralement, les branches formant les éléments d'entraînement (11) et, afin d'éviter un déplacement conjoint de l'autre moitié de manchon de changement de vitesses lors d'un engagement, un déplacement de rotation étant superposé au déplacement axial du logement d'actionnement de changement de vitesses (10), lequel déplacement de rotation est obtenu au moyen d'une denture hélicoïdale (24) sur le corps de synchronisation (4) ou sur un élément, disposé à demeure sur un arbre, de l'élément de changement de vitesses, dans laquelle s'engrène une denture hélicoïdale intérieure (25) sur la nervure (26) du logement d'actionnement de changement de vitesses (10).

17. Élément de changement de vitesses selon la revendication 16, **caractérisé en ce que** des griffes (27) sont fixées, du côté frontal, aux côtés frontaux des moitiés de manchon de changement de vitesses (8, 9) et à la nervure (26) centrale du logement d'actionnement de changement de vitesses (10), lesquelles griffes ont, dans la position centrale, une position en rotation définie les unes par rapport aux autres, de telle sorte que, lors d'un déplacement du logement d'actionnement de changement de vitesses (10) qui résulte en une rotation du logement d'actionnement de changement de vitesses (10) par rapport au corps de synchronisation (4) ou à un élément, disposé à demeure sur un arbre, de l'élément de changement de vitesses et par rapport aux moitiés de manchon de changement de vitesses (8, 9), la position angulaire des griffes (27) les unes par rapport aux autres change de telle sorte que les griffes (27) sur le côté, tourné vers la moitié de manchon de changement de vitesses ne devant pas être engagée, de la nervure (26) du logement d'actionnement de changement de vitesses (10) viennent se placer directement près des griffes (27) de cette moitié de manchon de changement de vitesses pour libérer la voie axiale, et que les griffes (27) sur le côté, tourné vers la moitié de manchon de changement de vitesses devant être engagée, de la nervure (26) viennent se placer directement en face des côtés frontaux des griffes (27) de la moitié de manchon de changement de vitesses devant être engagée, afin, lors d'un engagement dans la position centrale de la moitié de manchon de changement de vitesses engagée, de repousser celle-ci dans la position initiale et en l'occurrence de synchroniser et d'enclencher le rapport, un déplacement de glissement relatif ayant lieu au niveau des côtés frontaux des griffes (27) du fait de la rotation lors de ce déplacement de poussée, de telle sorte que les griffes (27) se trouvent à nouveau dans la position initiale à la fin du déplacement de poussée.

18. Élément de changement de vitesses selon la revendication 3, **caractérisé en ce que** le logement d'actionnement de changement de vitesses (10) est réalisé de manière radialement élastique et comprend des languettes (32) détendues radialement et disposées sur la périphérie, lesquelles sont déviées radialement vers l'extérieur lors d'un déplacement du logement d'actionnement de changement de vitesses (10) sur la moitié de manchon de changement de vitesses fixe respective, des billes (28) étant prévues pour permettre le déplacement de déviation, lesquelles sont guidées dans des rainures (30, 31) dans les languettes (32) détendues dans le logement d'actionnement de changement de vitesses (10) et les moitiés de manchon de changement de vitesses (8, 9).

19. Élément de changement de vitesses selon la revendication 18, **caractérisé en ce que** les rainures (30, 31) dans les languettes (32) détendues du logement d'actionnement de changement de vitesses (10) et les moitiés de manchon de changement de vitesses (8, 9) sont déformées de telle sorte que, lors d'un actionnement du logement d'actionnement de changement de vitesses (10) pour désenclencher un rapport, les billes (28) associées à la moitié de manchon de changement de vitesses ne devant pas être engagée soient déplacées radialement vers l'extérieur, de sorte que le logement d'actionnement de changement de vitesses (10) soit fléchi radialement vers l'extérieur au moyen des languettes (32), de telle sorte que la moitié de manchon de changement de vitesses ne devant pas être engagée ne soit pas déplacée conjointement.

20. Élément de changement de vitesses selon la revendication 19, **caractérisé en ce que** la force de ressort qui agit en l'occurrence par le biais des billes (28) sur la moitié de manchon de changement de vitesses ne devant pas être engagée est supportée par une bague de fixation (29) ou, en variante, par la roue dentée associée à la moitié de manchon de changement de vitesses ne devant pas être engagée.

21. Élément de changement de vitesses selon la revendication 19 ou 20, **caractérisé en ce que** la force de ressort dans les languettes (32) élastiques du logement d'actionnement de changement de vitesses (10) est sélectionnée de manière à être suffisamment grande pour retenir de manière sûre les billes (28) dans les rainures (30, 31) lors de la synchronisation et/ou de l'enclenchement d'un rapport.

22. Élément de changement de vitesses selon la revendication 3, **caractérisé en ce que** le logement d'actionnement de changement de vitesses (10) est réalisé en forme de Π, les branches formant les éléments d'entraînement (11), une tôle (33) en acier à ressorts s'appliquant contre les côtés intérieurs des éléments d'entraînement (11) étant insérée sur le côté intérieur du logement d'actionnement de changement de vitesses (10), laquelle tôle comprenant des languettes élastiques (34) faisant saillie radialement vers l'intérieur, lesquelles peuvent être pivotées en direction de l'élément d'entraînement (11) pour la moitié de manchon de changement de vitesses associée à la languette élastique (34) respective et, dans la position centrale de l'élément de changement de vitesses (1), s'appliquent contre les faces frontales intérieures des moitiés de manchon de changement de vitesses (8, 9) de telle sorte que, lors d'un déplacement axial du logement d'actionnement de changement de vitesses (10), la languette élastique (34) qui s'applique contre la face frontale intérieure de la moitié de manchon de changement de vitesses ne devant pas être engagée soit déviée radialement vers l'extérieur sur celle-ci, de sorte qu'un déplacement de la moitié de manchon de changement de vitesses ne devant pas être engagée soit évité et, lors d'un engagement dans la position centrale, le logement de manchon de changement de vitesses (10) entraînant la moitié de manchon de changement de vitesses devant être engagée par le biais de la languette élastique rabattue vers le bas et s'appliquant contre la moitié de manchon de changement de vitesses devant être engagée et, lorsque le logement d'actionnement de changement de vitesses (10) est revenu à la position centrale, la languette élastique située radialement vers l'extérieur sur la moitié de manchon de changement de vitesses ne devant pas être engagée étant rabattue radialement vers l'intérieur, de sorte que l'état initial soit rétabli.

23. Élément de changement de vitesses selon la revendication 3, **caractérisé en ce que**, dans le cas d'une synchronisation, le logement d'actionnement de changement de vitesses (10) est réalisé en forme de Π, les branches formant les éléments d'entraînement (11), et des blocs basculants (35) étant prévus pour empêcher l'entraînement de la moitié de manchon de changement de vitesses ne devant pas être engagée, lesquels sont disposés de manière basculante dans des rainures (36) dans le corps de synchronisation (4) ou dans un élément, disposé à demeure sur un arbre, de l'élément de changement de vitesses, des éléments d'entraînement (37) étant prévus sur les blocs basculants (35), lesquels éléments d'entraînement viennent en prise dans des rainures (38) sur le côté intérieur du logement d'actionnement de changement de vitesses (10) et, dans la position centrale, les rainures (36) et les rainures (38) étant superposées et, lors d'un déplacement du logement d'actionnement de changement de vitesses (10) pour désenclencher un rapport, les blocs basculants (35) étant pivotés autour de leur support dans le corps de synchronisation (4) ou dans un élément, disposé à demeure sur un arbre, de l'élément de changement de vitesses pour libérer la voie axiale pour la moitié de manchon de changement de vitesses devant être engagée, et l'aile, tournée vers la moitié de manchon de changement de vitesses ne devant pas être engagée, des blocs basculants (35) étant pivotée radialement vers l'intérieur, de manière non entravée, devant la moitié de manchon de changement de vitesses ne devant pas être engagée et, lors d'un engagement dans la position centrale, les blocs basculants (35) venant en contact avec la moitié de manchon de changement de vitesses à déplacer du fait du déplacement du logement d'actionnement de changement de vitesses (10) et déplaçant celle-ci pour synchroniser et enclencher le rapport.

24. Élément de changement de vitesses selon la revendication 23, **caractérisé en ce que** les côtés frontaux intérieurs des moitiés de manchon de changement de vitesses (8, 9) comprennent un chanfrein (39).

25. Élément de changement de vitesses selon la revendication 3, **caractérisé en ce que** le logement d'actionnement de changement de vitesses (10) est réalisé en forme de Π, les branches formant les éléments d'entraînement (11), des corps pivotants (40) montés à rotation dans le corps de synchronisation (4) ou dans un élément, disposé à demeure sur un arbre, de l'élément de changement de vitesses étant prévus pour empêcher l'entraînement de la moitié de manchon de changement de vitesses ne devant pas être engagée, lesquels corps pivotants viennent en prise par le biais d'éléments d'entraînement (41) dans des rainures (42) sur le côté intérieur du logement d'actionnement de changement de vitesses (10) et leurs plans de rotation sont situés tangentiellement à la périphérie du corps de synchronisation (4) ou d'un élément, disposé à demeure sur un arbre, de l'élément de changement de vitesses et, lors d'un déplacement du logement d'actionnement de changement de vitesses (10), les corps pivotants (40) étant entraînés en rotation pour libérer la voie axiale pour la moitié de manchon de changement de vitesses devant être engagée, sans déplacer la moitié de manchon de changement de vitesses ne devant pas être engagée et, lors d'un engagement dans la position centrale, les corps pivotants (40) venant en contact avec la moitié de manchon de changement de vitesses à déplacer du fait du déplacement du logement d'actionnement de changement de vitesses (10) et déplaçant celle-ci pour synchroniser et enclencher le rapport.
